# EUROPEAN PATENT SPECIFICATION

(11) **EP 3 971 627 B1**
(45) Date of publication and mention of the grant of the patent: **23.04.2025**
(21) Application number: 19932959.0
(22) Date of filing: 13.06.2019
(51) Int. Cl.: G02B 6/44

(54) **OPTICAL CABLE SPLICING APPARATUS**
SPLEISSGERÄT FÜR OPTISCHE KABEL
APPAREIL D'ÉPISSAGE DE CÂBLE OPTIQUE

(43) Date of publication of application: 23.03.2022
(73) Proprietor: Huawei Technologies Co., Ltd., Longgang District Shenzhen, Guangdong 518129 (CN)
(72) Inventor: CHENG, Jian, Shenzhen, Guangdong 518129 (CN); YANG, Anliang, Shenzhen, Guangdong 518129 (CN); YU, Jianxiong, Shenzhen, Guangdong 518129 (CN)
(74) Representative: Thun, Clemens
(86) International application number: PCT/CN2019/091156
(87) International publication number: WO 2020/248198

(56) References cited:
- WO-A1-2010/055451
- CN-A- 106 537 208
- CN-A- 107 219 599
- CN-U- 202 372 677
- CN-U- 202 372 677
- CN-U- 202 372 677
- CN-U- 202 886 688
- CN-U- 205 539 621
- CN-U- 206 515 531
- CN-U- 207 232 465
- FR-A1- 3 047 809
- US-A- 4 715 675
- US-A1- 2015 346 449
- US-A1- 2015 346 449

## Description

### TECHNICAL FIELD

This application relates to the field of optical communications technologies, and in particular, to an optical cable connection apparatus.

### BACKGROUND

Fiber to the home (FTTH) features a passive network, high bandwidth, diversified service types, flexible protocols, and the like. In fiber to the home, optical cables and optical fibers are used to layout lines, and a fiber access terminal is used to manage a single drop cable.

The drop cable in the fiber access terminal may be connected to a distribution cable in the fiber access terminal. Based on different requirements, a field-mountable optical connector (FMC) can be fabricated on site at one end of the drop cable, and is connected to the distribution cable through a termination panel. Alternatively, a drop cable with a fast connector may be used to be connected to the distribution cable through a termination panel. Alternatively, the drop cable may be spliced with a termination panel. However, a current fiber access terminal can hardly support all of the foregoing three connection manners, and an operator needs to purchase, during network layout based on scenarios of drop cables, different fiber access terminals supporting different connection manners.

International patent application publication WO 2010/055451 A1 discloses a prior art optical cable closure.

### SUMMARY

Embodiments of this application provide an optical cable connection apparatus. The optical cable connection apparatus supports connection manners of fabricating an FMC on site, using a fast connector (Refers to prefabricated optical fiber connector), and splicing. The above mentioned problem is solved by the subject matter of the independent claim. Further implementation forms are provided in the dependent claims.

To achieve the foregoing objective, the following technical solutions are used in the embodiments of this application.
An optical cable connection apparatus is provided in the embodiments of this application. The optical cable connection apparatus includes a top cover, a bottom housing, a flap, at least one optical fiber connection module, a first splicing assembly, and a second splicing assembly. The bottom housing is rotationally connected to the top cover, and forms a receptacle with the top cover. At least one optical cable hole and a plurality of fiber leading-out holes are disposed on the bottom housing. The flap is located in the receptacle and is rotationally connected to the top cover or the bottom housing. The flap includes a first surface and a second surface that are disposed opposite to each other. The optical fiber connection module is disposed on the first surface of the flap, and includes a plurality of optical fiber interfaces. Each of the optical fiber interfaces is configured to be connected to one optical fiber sub-assembly. The first splicing assembly is disposed on the second surface of the flap, and includes a plurality of first fiber splicing slots and a first fiber spool structure.

It can be learned from the foregoing that the optical fiber connection module disposed on the first surface of the flap includes the plurality of optical fiber interfaces. Each of the optical fiber interfaces is configured to be connected to an FMC of one drop cable, or connected to one drop cable with a fast connector. In this way, the optical cable connection structure can have the drop cable and a distribution cable connected by fabricating the FMC on site or through the fast connector. In addition, the first splicing assembly is disposed on the second surface of the flap. Therefore, a spliced part of the drop cable and the distribution cable that are connected through a fiber splicing process can be slotted into the first fiber splicing slot of the first splicing assembly, to secure a spliced part of the drop cable and the distribution cable. Then, an extra part of a spliced optical cable is spooled onto the first fiber spool structure. In this way, the optical cable connection structure can have the drop cable and the distribution cable connected through splicing. Therefore, the optical cable connection structure can be compatible with the foregoing three connection manners, and a connection function of the optical cable connection structure is no longer limited. An operator does not need to purchase, based on scenarios of drop cables, different optical cable connection structures supporting different connection manners. This improves applicability of the optical cable connection structure.

Optionally, the optical cable connection apparatus further includes the second splicing assembly. The second splicing assembly is disposed on a surface that is of the bottom housing and that faces the top cover, and includes a plurality of second fiber splicing slots and a second fiber spool structure. In this way, a spliced part of the drop cable and the distribution cable that are connected through a fiber splicing process can be slotted into the second fiber splicing slot of the second splicing assembly, to secure a spliced part of the drop cable and the distribution cable that are connected. In addition, an extra part of a spliced optical cable is spooled onto the second fiber spool structure. In this case, the optical cable connection structure has two splicing assemblies independently disposed in different positions, namely, the first splicing assembly and the second splicing assembly. Therefore, splicing in different scenarios, for example, splicing between a straight-through cable and a branching cable, splicing between a straight-through cable and a pigtail, or splicing between a pigtail and the drop cable, may be implemented in different splicing assemblies. This can avoid inconvenience in engineering installation and maintenance arising from complex routing caused by intersecting optical cables such as the straight-through cable, the branching cable, the drop cable, and the pigtail. In addition, the first splicing assembly and the second splicing assembly are located in separate splicing areas, and each splicing assembly may correspond to only one splicing scenario. This may effectively reduce a size of a splicing assembly, and then reduces a size of the entire optical cable connection apparatus.

Optionally, the optical cable connection apparatus further includes a splicing tray and a third splicing assembly. The splicing tray is rotationally connected to the bottom housing, and is located between the flap and the bottom housing. The third splicing assembly is disposed on a surface that is of the splicing tray and that faces the flap. The third splicing assembly includes a plurality of third fiber splicing slots and a third fiber spool structure. In this case, the splicing tray and the third splicing assembly located on the splicing tray are disposed in the optical cable connection apparatus, and the optical cable connection apparatus 01 can support more diversified splicing scenarios. Splicing between the straight-through cable and the branching cable, splicing between the straight-through cable and the pigtail, and splicing between the pigtail and the drop cable can be separately performed in different splicing areas including the first splicing assembly, the second splicing assembly, and the third splicing assembly. This further simplifies a cabling network.

Optionally, the optical fiber connection module includes an optical splitter bracket and at least one bracket-mounted optical splitter. The optical splitter bracket has at least one layer of mounting groove. One bracket-mounted optical splitter is mounted in one layer of mounting groove. In this case, the optical fiber connection module may be an optical splitter that can perform fiber optical splitting.

Optionally, the optical fiber connection module further includes a rotating shaft. The optical splitter bracket is rotationally connected to the flap through the rotating shaft, and an included angle is formed between the optical splitter bracket and the first surface of the flap. In this case, the optical splitter bracket may be rotationally connected to the flap through the rotating shaft. When the optical splitter bracket rotates around the rotating shaft, an included angle is formed between the optical splitter bracket and the first surface of the flap. Therefore, the included angle is also formed between the bracket-mounted optical splitter in a lower-layer mounting groove and the first surface of the flap. In this case, operating space for an engineering person is expanded when the engineering person inserts the optical fiber sub-assembly into an optical splitter. Therefore, the engineering person can easily insert the optical fiber sub-assembly into the optical fiber interface of the bracket-mounted optical splitter.

Optionally, the optical fiber connection module includes a termination panel. A plurality of optical fiber interfaces are disposed on both sides of the termination panel. One optical fiber interface at one side of the termination panel can be configured to be connected to an FMC of a to-be-connected optical cable, such as the drop cable, or connected to one drop cable with the fast connector. One interface on the other side of the termination panel can be configured to be connected to the pigtail.

Optionally, the optical cable connection apparatus further includes a micro optical splitter disposed on the second surface of the flap. Outputs of the micro optical splitter are configured to be one-to-one coupled to a plurality of optical fiber interfaces that are on a same connection surface of the termination panel. The micro optical splitter may perform optical splitting processing on one optical cable at an input, so as to obtain a plurality of optical cables at the outputs.

Optionally, the optical cable connection apparatus further includes an optical splitter securing slot disposed on the second surface of the flap, where the optical splitter securing slot is configured to secure the micro optical splitter. This prevents a position of the micro optical splitter from changing during use of the optical cable connection apparatus.

Optionally, the optical cable connection apparatus further includes at least one fourth fiber spool structure and a separation plate. The fourth fiber spool structure is disposed on the second surface of the flap, and is configured to spool a remaining part of a pigtail that needs to be spliced. In addition, the separation plate is disposed on the second surface of the flap and located between the first splicing assembly and the fourth fiber spool structure, and is configured to separate the first splicing assembly from the fourth fiber spool structure, resulting in neat cabling of an optical cable. Further, there is a cabling gap between one end of the separation plate and a side wall of the flap, to facilitate cabling of the optical cable on the second surface of the flap.

Optionally, the optical cable connection apparatus further includes at least one cabling hole disposed on the flap. The cabling hole penetrates the first surface and the second surface, and is configured to pass an optical fiber coupled to the optical fiber connection module. In this way, a pigtail on the first surface of the flap can pass through the cabling hole to the second surface of the flap. Similarly, a pigtail on the second surface of the flap can also pass through the cabling hole to the first surface of the flap.

Optionally, the optical cable connection apparatus further includes a first optical fiber routing path and a second optical fiber routing path. The first optical fiber routing path is disposed on the flap, and can be used to lead an optical cable to the first surface. The second optical fiber routing path is disposed on the flap, and can be used to lead an optical cable to the second surface.

The optical cable connection apparatus further includes an optical cable securing structure. The optical cable securing structure includes a first clamping member, a second clamping member, a fastener, a tearing member, and a protection cover. There is a first cable passing structure on a first fitting surface that is of the first clamping member and that is used for securing the optical cable. There is a second cable passing structure on a second fitting surface that is of the second clamping member and that is used for securing the optical cable. The first clamping member and the second clamping member can be clamped together by the fastener and are detachably connected. At least a part of the first fitting surface of the first clamping member touches at least a part of the second fitting surface of the second clamping member by the fastener. The first cable passing structure and the second cable passing structure are aligned to form a cable channel configured to lead through the optical cable. The cable channel is in interference fit with the optical cable. Further, the tearing member is connected to a first end face that is of the first clamping member and that is configured to lead out the optical cable. One part of the protection cover is connected to the tearing member, and the other part of the protection cover protrudes from the first end face. The protection cover covers a mouth of the cable channel when the first clamping member and the second clamping member are clamped together by the fastener. The tearing member and the protection cover may be used to seal the cable channel. In this way, before a user enables a service in fiber to the home, the tearing member and the protection cover are used to block the cable channel, so that the drop cable cannot be led through the optical cable securing structure out of the fiber leading-out hole on the bottom housing of the optical cable connection apparatus. Therefore, the optical cable connection apparatus can be internally sealed and is protected. Therefore, when the user enables the service, a worker may tear off the protection cover at a position of the tearing member, to expose the mouth of the cable channel that is originally blocked by the protection cover. This helps the drop cable be led out of the box body of the optical cable connection apparatus and be connected to one optical fiber inlet of a user. Components of the optical cable securing structure, namely, the protection cover, the tearing member, a wrapping member, the first clamping member, and the second clamping member may all be made of plastic materials. Therefore, the optical cable securing structure 20 formed using one patterning process integrates all components. The integrated optical cable securing structure can reduce a probability of losing a component during construction or maintenance of the optical cable connection apparatus performed by the worker.

Optionally, the first cable passing structure includes a first trough, a first cabling groove, and a first clamping groove. The first trough is disposed on the first fitting surface, and includes a first exit side wall close to the protection cover and a first entrance side wall away from the protection cover. The first cabling groove is disposed on the first exit side wall and communicates with the first trough. The first clamping groove is disposed on the first entrance side wall and communicates with the first trough. The second cable passing structure includes a second trough, a second cabling groove, and a second clamping groove. The second trough is disposed on the second fitting surface, and includes a second exit side wall close to the protection cover and a second entrance side wall away from the protection cover. The second cabling groove is disposed on the second exit side wall and communicates with the second trough. The second clamping groove is disposed on the second entrance side wall and communicates with the second trough. A through hole formed by aligning the first cabling groove and the second cabling groove is in clearance fit with an optical cable. Therefore, the drop cable can be easily led out of the optical cable securing structure. A shape of the through hole formed by aligning the first cabling groove and the second cabling groove may match a shape of a cross-section of the drop cable. In addition, the optical cable securing structure further includes at least one first limiting bump disposed on a groove bottom of the first clamping groove and at least one first limiting bump disposed on a groove bottom of the second clamping groove. The first limiting bump is configured to limit the optical cable, to enable an interference fit between the optical cable and a through hole formed by aligning the first clamping groove having the first limiting bump and the second clamping groove having the first limiting bump. In this way, the drop cable can be secured by the through hole formed by aligning the first clamping groove having the first limiting bump and the second clamping groove having the first limiting bump.

Optionally, the first cable passing structure further includes at least one second reinforcing rib and at least one third clamping groove. The first reinforcing rib is located in the first trough and disposed in parallel with the first exit side wall. One third clamping groove is disposed on one first reinforcing rib and communicates with the first trough. In addition, the second cable passing structure further includes at least one second reinforcing rib and at least one fourth clamping groove. The second reinforcing rib is located in the second trough and disposed in parallel with the second exit side wall. One fourth clamping groove is disposed on one second reinforcing rib and communicates with the second trough. The optical cable securing structure further includes at least one first limiting bump disposed on a groove bottom of the third clamping groove and at least one first limiting bump disposed on a groove bottom of the fourth clamping groove. The first limiting bump is configured to limit the optical cable, to enable an interference fit between the optical cable and a through hole formed by aligning the third clamping groove having the first limiting bump and the fourth clamping groove having the first limiting bump. In this way, the position of the drop cable can be further secured by the through hole formed by aligning the third clamping groove having the first limiting bump and the fourth clamping groove having the first limiting bump.

Optionally, the optical cable securing structure further includes a plurality of second limiting bumps. The second limiting bump is disposed on a part that is of a surface, away from the first fitting surface, of the first clamping member and that is configured to fit the fiber leading-out hole; and is disposed on a part that is of the surface, away from the second fitting surface, of the second clamping member and that is configured to fit the fiber leading-out hole.

### BRIEF DESCRIPTION OF DRAWINGS

FIG. 1a is a schematic structural diagram of an optical cable connection apparatus according to an embodiment of this application;
FIG. 1b is a schematic structural diagram of another optical cable connection apparatus according to an embodiment of this application;
FIG. 2a is a schematic diagram of various components on a first surface of a flap shown in FIG. 1b;
FIG. 2b is a schematic diagram of various components on a surface that is of a bottom housing shown in FIG. 1b and that faces a top cover;
FIG. 3a is a schematic structural diagram of another optical cable connection apparatus according to an embodiment of this application;
FIG. 3b is a schematic structural diagram of a splicing tray shown in FIG. 3a;
FIG. 4a is another schematic diagram of various components on a first surface of a flap shown in FIG. 1b;
FIG. 4b is a schematic structural diagram of a bracket-mounted optical splitter according to an embodiment of this application;
FIG. 5a is a schematic structural diagram of an optical splitter bracket according to an embodiment of this application;
FIG. 5b is a schematic diagram in which an optical splitter bracket rotates relative to a flap according to an embodiment of this application;
FIG. 5c is another schematic diagram in which an optical splitter bracket rotates relative to a flap according to an embodiment of this application;
FIG. 6 is a schematic diagram of a type of optical cable connection according to an embodiment of this application;
FIG. 7a is a schematic diagram of another type of optical cable connection according to an embodiment of this application;
FIG. 7b is a schematic diagram of connecting a pigtail in FIG. 7a after the pigtail is led through a flap;
FIG. 8a is a schematic diagram of another type of optical cable connection according to an embodiment of this application;
FIG. 8b is a schematic diagram of leading a drop cable shown in FIG. 8a to a second surface of a flap for splicing;
FIG. 9 is another schematic diagram of various components on a first surface of a flap shown in FIG. 1b;
FIG. 10 is a schematic diagram of optical cable connection using a structure shown in FIG. 9;
FIG. 11 is another schematic diagram of optical cable connection using a structure shown in FIG. 9;
FIG. 12 is a schematic diagram of connecting a plurality of pigtails led to a second surface of a flap according to an embodiment of this application;
FIG. 13 is a schematic diagram of connecting drop cables to a plurality of pigtails led to a second surface of a flap according to an embodiment of this application;
FIG. 14 is a schematic diagram of an optical cable securing structure shown in FIG. 1a;
FIG. 15 is a cutaway drawing obtained by cutting along a dashed line O1-O1 shown in FIG. 14;
FIG. 16 is a cutaway drawing obtained by cutting along a dashed line O2-O2 shown in FIG. 14;
FIG. 17 is a schematic structural diagram of an optical cable securing structure according to an embodiment of this application;
FIG. 18 is a schematic structural diagram obtained by viewing along a direction B shown in FIG. 15;
FIG. 19 is another schematic structural diagram of an optical cable securing structure according to an embodiment of this application;
FIG. 20a is a schematic structural diagram of a tearing member shown in FIG. 19;
FIG. 20b is another schematic structural diagram of a tearing member shown in FIG. 19;
FIG. 21a is another schematic structural diagram of an optical cable securing structure according to an embodiment of this application;
FIG. 21b is a schematic diagram of an installation position of an optical cable securing structure in an optical cable connection apparatus according to an embodiment of this application;
FIG. 21c is a schematic diagram of another installation position of an optical cable securing structure in an optical cable connection apparatus according to an embodiment of this application;
FIG. 21d is another schematic structural diagram of an optical cable securing structure according to an embodiment of this application;
FIG. 21e is another schematic structural diagram of an optical cable securing structure according to an embodiment of this application;
FIG. 22 is another schematic structural diagram of an optical cable securing structure according to an embodiment of this application;
FIG. 23a is another cutaway drawing obtained by cutting along a dashed line O1-O1 shown in FIG. 14;
FIG. 23b is another cutaway drawing obtained by cutting along a dashed line O1-O1 shown in FIG. 14;
FIG. 24a is another cutaway drawing obtained by cutting along a dashed line O1-O1 shown in FIG. 14;
FIG. 24b is a schematic diagram of an optical cable securing structure having a tearing member and a wrapping member;
FIG. 24c is another schematic diagram of an optical cable securing structure having a tearing member and a wrapping member;
FIG. 25 is another schematic structural diagram of an optical cable securing structure according to an embodiment of this application;
FIG. 26 is another schematic structural diagram of an optical cable securing structure according to an embodiment of this application;
FIG. 27a is a schematic diagram in which a first clamping member and a second clamping member of an optical cable securing structure are clamped together according to an embodiment of this application;
FIG. 27b is another schematic diagram in which a first clamping member and a second clamping member of an optical cable securing structure are clamped together according to an embodiment of this application;
FIG. 28a is another schematic structural diagram of an optical cable securing structure according to an embodiment of this application;
FIG. 28b is another schematic structural diagram of an optical cable securing structure according to an embodiment of this application; and
FIG. 29 is another schematic structural diagram of an optical cable securing structure according to an embodiment of this application.

### Reference numerals:

01: Optical cable connection apparatus; 10: Top cover; 11: Bottom housing; 100: Optical cable hole; 101: Fiber leading-out hole; 12: Flap; 13: Optical fiber connection module; 131: Optical fiber interface; 14: First splicing assembly; 141: First fiber spool structure; 1411: Fiber spool; 1412: Fiber baffle; 140: First fiber splicing slot; 15: Second splicing assembly; 150: Second fiber splicing slot; 151: Second fiber spool structure; 16: Splicing tray; 17: Third splicing assembly; 170: Third fiber splicing slot; 171: Third fiber spool structure; 30: Optical splitter bracket; 301: Mounting groove; 31: Bracket-mounted optical splitter; 302: Rotating shaft; 311: First optical fiber routing path; 313: Wall; 121: Cabling hole; 132: Optical fiber sub-assembly; 18: Fourth fiber spool structure; 122: Separation plate; 312: Second optical fiber routing path; 40: Micro optical splitter; 41: Optical splitter securing slot; 20: Optical cable securing structure; 201: First clamping member; 202: Second clamping member; 200: Cable channel; 204: Tearing member; 205: Protection cover; 203: Fastener; 213: Buckle; 223: Slot; 24: Connection rod; 23: Opening groove; 2041: Connection post; 29: Second limiting bump; 25: Wrapping member; 26: Rubber part; 27: Plastic part; 210: First trough; 211: First cabling groove; 212: First clamping groove; 280: First exit side wall; 281: First entrance side wall; 220: Second trough; 221: Second cabling groove; 222: Second clamping groove; 282: Second exit side wall; 283: Second entrance side wall; 28: Through hole; 290: First limiting bump; 214: First reinforcing rib; 215: Third clamping groove; 224: Second reinforcing rib; 225: Fourth clamping groove.

### DESCRIPTION OF EMBODIMENTS

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features.

In addition, in this application, the terms of direction such as "upper", "lower", "left", and "right" are defined relative to an illustrated placement position of a component in an accompanying drawing. It should be understood that the terms of direction are relative concepts and are used to describe and clarify relativity, and may be changed accordingly as a placement position of the component in the accompanying drawing changes.

In this application, unless otherwise explicitly specified and limited, the term "connection" should be understood in a broad sense. For example, the "connection" may be a fixed connection, a detachable connection, or an integral connection; and may be a direct connection or an indirect connection using an intermediate medium.

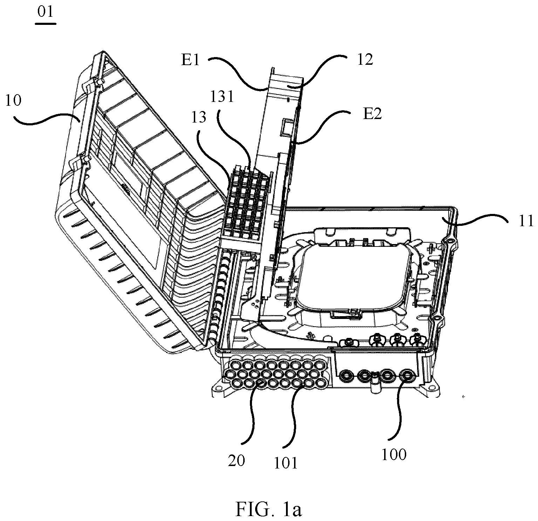

An embodiment of this application provides an optical cable connection apparatus. The optical cable connection apparatus may be a fiber access terminal (FAT), a splitting and splicing closure (SSC), a terminal box (terminal box, TB), or another box body that can be applied to an optical distribution network (ODN). A specific form of the optical cable connection apparatus is not particularly limited in the embodiments of this application. For ease of description, the following uses examples in which an optical cable connection apparatus 01 is a fiber access terminal shown in FIG. 1a for description.

In this case, the optical cable connection apparatus 01 includes a top cover 10 and a bottom housing 11 shown in FIG. 1a. The bottom housing 11 is rotationally connected to the top cover 10. The top cover 10 and the bottom housing 11 are snapped together to form a box body, and there is a receptacle inside the box body. At least one optical cable hole 100 and a plurality of fiber leading-out holes 101 are disposed on the bottom housing 11.

When connecting an optical cable provided by an optical cable provider, which is referred to as a main cable below, to an optical fiber inlet of a user, a worker first needs to lead the main cable through the optical cable hole 100 into the optical cable connection apparatus 01. Then, an optical fiber that needs to be led to the home is separated from the main cable located in the optical cable connection apparatus 01. Next, the optical fiber is spliced with the distribution cable and then is distributed in the optical cable connection apparatus 01 ; or the optical fiber is spliced with a distribution cable, and then distribution and optical splitting are performed on the optical fiber in the optical cable connection apparatus 01. Finally, one optical cable is provided to each fiber leading-out hole 101, and the optical cable is referred to as a drop cable below. Each drop cable is connected to one optical fiber inlet of a user, so as to implement fiber to the home.

In addition, the optical cable connection apparatus 01 further includes a flap 12 and at least one optical fiber connection module 13. The flap 12 is located in the receptacle of the optical cable connection apparatus 01 and is rotationally connected to the top cover 10 or the bottom housing 11. Then, in a process of rotating the flap 12 relative to the bottom housing 11, an included angle may be formed between the flap 12 and each of the top cover 10 and the bottom housing 11.

It should be noted that, that the flap 12 is rotationally connected to the top cover 10 or the bottom housing 11 may be that the flap 12 is directly connected to the top cover 10 or the bottom housing 11. Alternatively, the flap 12 may be indirectly connected to the top cover 10 or the bottom housing 11 with another component. For example, when a bottom plate connected to the bottom housing 11 is disposed on a surface that is of the bottom housing 11 and that faces the flap 12, the flap 12 may be rotationally connected to the bottom plate, and therefore the flap 12 is rotationally connected to the bottom housing 11.

The flap 12 includes a first surface E1 and a second surface E2 that are disposed opposite to each other. The first surface E1 faces the top cover 10, and the second surface E2 faces the bottom housing 11. Alternatively, the first surface E1 faces the bottom housing 11, and the second surface E2 faces the top cover 10. For ease of description, descriptions are provided below by using examples in which the first surface E1 faces the top cover 10 and the second surface E2 faces the bottom housing 11.

The optical fiber connection module 13 is disposed on the first surface E1 of the flap 12, and includes a plurality of optical fiber interfaces 131. Each of the optical fiber interfaces 131 is configured to be connected to an FMC of one drop cable, or connected to one drop cable with a fast connector.

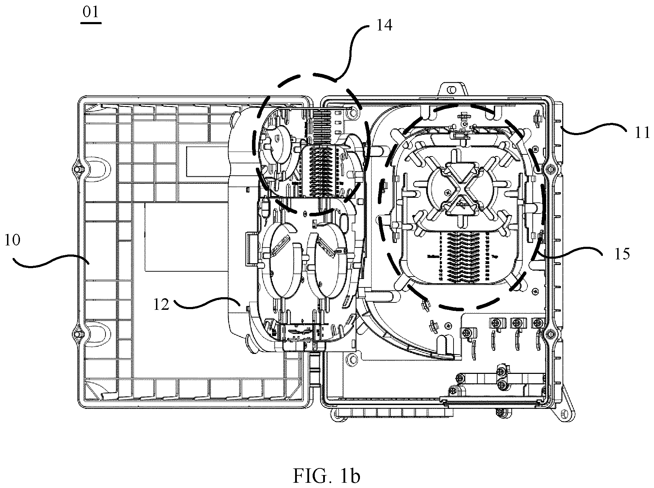

In addition, the optical cable connection apparatus 01 further includes a first splicing assembly 14 and a second splicing assembly 15 that are shown in FIG. 1b.

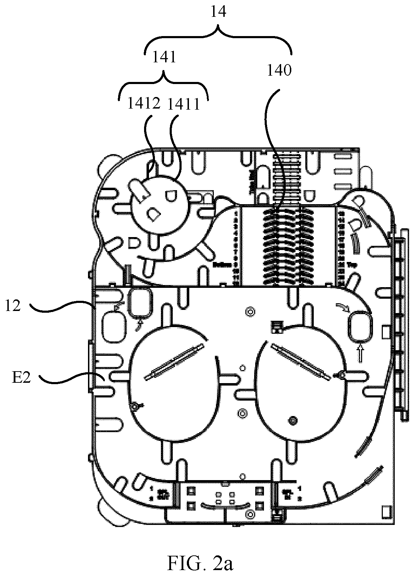

As shown in FIG. 2a, the first splicing assembly 14 is disposed on the second surface E2 of the flap 12, and includes a first fiber splicing slot 140 and a first fiber spool structure 141. A position in which the first fiber splicing slot 140 is located is a first fiber splicing area in the optical cable connection structure 01.

A spliced part of two optical cables, for example, the drop cable and the distribution cable, that are connected through a fiber splicing process can be slotted into the first fiber splicing slot 140, to secure a spliced part of the drop cable and the distribution cable.

In addition, the first fiber spool structure 141 includes a plurality of fiber spools 1411 and a plurality of fiber baffles 1412 connected to the fiber spools. A position in which the first fiber spool structure 141 is located constitutes a first fiber spool area in the optical cable connection structure 01. An extra part of an optical cable secured to the first fiber splicing slot 140 through the fiber splicing process may be spooled in the first fiber spool area, resulting in neat cabling of the optical cable connection apparatus 01.

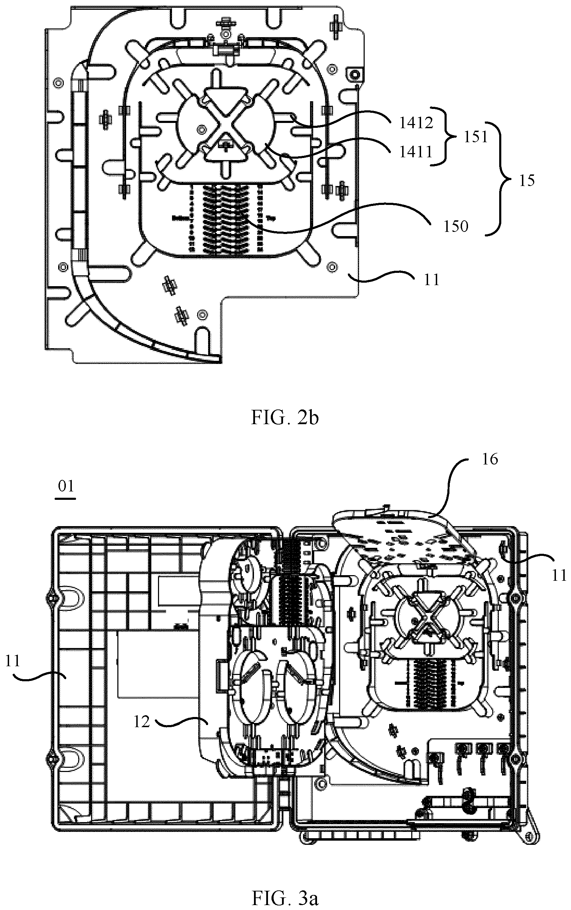

In addition, the second splicing assembly 15 shown in FIG. 1b is disposed on a surface that is of the bottom housing 11 and that faces the top cover 10. As shown in FIG. 2b, the second splicing assembly 15 includes a plurality of second fiber splicing slots 150 and a second fiber spool structure 151. A position in which the second fiber splicing slot 150 is located is a second fiber splicing area in the optical cable connection structure 01.

A spliced part of the drop cable and the distribution cable that are connected through the fiber splicing process can be slotted into the second fiber splicing slot 150, to secure a spliced part of the drop cable and the distribution cable.

In addition, the second fiber spool structure 151 includes a plurality of fiber spools 1411 and a plurality of fiber baffles 1412 connected to the fiber spools. A position in which the second fiber spool structure 151 is located constitutes a second fiber spool area in the optical cable connection structure 01. An extra part of an optical cable secured to the second fiber splicing slot 150 through the fiber splicing process may be spooled in the second fiber spool area.

It can be learned from the foregoing that the optical fiber connection module 13 disposed on the first surface E1 of the flap 12 includes the plurality of optical fiber interfaces 131. Each of the optical fiber interfaces 131 is configured to be connected to the FMC of one drop cable, or connected to one drop cable with the fast connector. In this way, the optical cable connection structure 01 can have the drop cable and the distribution cable connected by fabricating the FMC on site or through the fast connector.

In addition, the first splicing assembly 14 is disposed on the second surface E2 of the flap 12. Therefore, the spliced part of the drop cable and the distribution cable that are connected through the fiber splicing process can be slotted into the first fiber splicing slot 140 of the first splicing assembly 14, to secure the spliced part of the drop cable and the distribution cable. Then, the extra part of a spliced optical cable is spooled onto the first fiber spool structure 141.

In this way, the optical cable connection structure 01 can have the drop cable and the distribution cable connected through splicing. Therefore, the optical cable connection structure 01 can be compatible with the foregoing three connection manners, and a connection function of the optical cable connection structure 01 is no longer limited. An operator does not need to purchase, based on scenarios of drop cables, different optical cable connection structures 01 supporting different connection manners. This improves applicability of the optical cable connection structure 01.

Further, the second splicing assembly 15 is disposed on the surface that is of the bottom housing 11 and that faces the top cover 10. Therefore, the spliced part of the drop cable and the distribution cable that are connected through the fiber splicing process can be slotted into the second fiber splicing slot 150 of the second splicing assembly 15, to secure the spliced part of the drop cable and the distribution cable that are connected. Then, the extra part of a spliced optical cable is spooled onto the second fiber spool structure 151.

In this case, the optical cable connection structure 01 has two splicing assemblies independently disposed in different positions, namely, the first splicing assembly 14 and the second splicing assembly 15. Therefore, splicing in different scenarios, for example, splicing between a straight-through cable and a branching cable, splicing between a straight-through cable and a pigtail, or splicing between a pigtail and a drop cable, may be implemented in different splicing assemblies. This can avoid inconvenience in engineering installation and maintenance arising from complex routing caused by intersecting optical cables such as the straight-through cable, the branching cable, the drop cable, and the pigtail. In addition, the first splicing assembly 14 and the second splicing assembly 15 are located in separate splicing areas, and each splicing assembly may correspond to only one splicing scenario. This may effectively reduce a size of a splicing assembly, and then reduces a size of the entire optical cable connection apparatus 01.

Further, as shown in FIG. 3a, the optical cable connection apparatus 01 further includes a splicing tray 16. The splicing tray 16 is rotationally connected to the bottom housing 11, and is located between the flap 12 and the bottom housing 11.

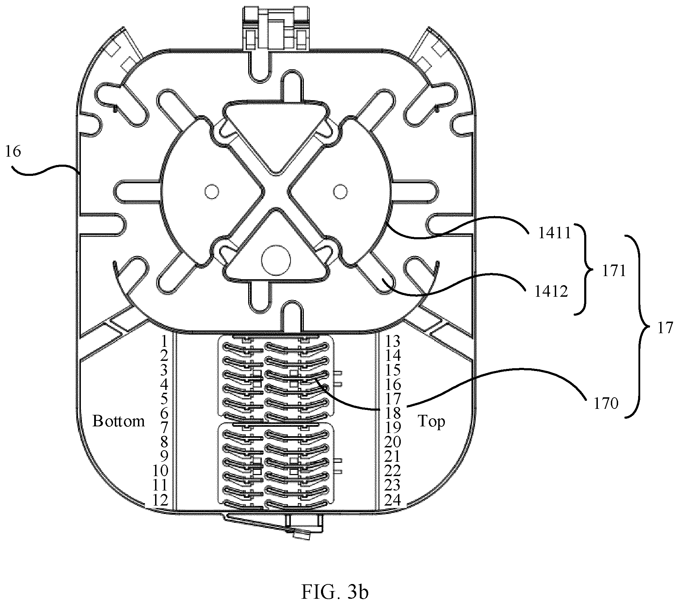

The optical cable connection apparatus 01 further includes a third splicing assembly 17 shown in FIG. 3b. The third splicing assembly 17 may be disposed on a surface that is of the splicing tray 16 and that faces the flap 12.

The third splicing assembly 17 includes a plurality of third fiber splicing slots 170 and a third fiber spool structure 171. A position in which the third fiber splicing slot 170 is located is a third fiber splicing area in the optical cable connection structure 01. A spliced part of the drop cable and the distribution cable that are connected through the fiber splicing process can be slotted into the third fiber splicing slot 170, to secure a spliced part of the drop cable and the distribution cable.

In addition, the third fiber spool structure 171 includes a plurality of fiber spools 1411 and a plurality of fiber baffles 1412 connected to the fiber spools. A position in which the third fiber spool structure 171 is located constitutes a third fiber spool area in the optical cable connection structure 01. An extra part of an optical cable secured to the third fiber splicing slot 170 through the fiber splicing process may be spooled in the third fiber spool area.

In this case, the splicing tray 16 and the third splicing assembly 17 located on the splicing tray 16 are disposed in the optical cable connection apparatus 01, and the optical cable connection apparatus 01 can support more diversified splicing scenarios. Splicing between the straight-through cable and the branching cable, splicing between the straight-through cable and the pigtail, and splicing between the pigtail and the drop cable can be separately performed in different splicing areas including the first splicing assembly 14, the second splicing assembly 15, and the third splicing assembly 17. This further simplifies a cabling network.

For different types of optical fiber connection modules 13 disposed on the first surface E1 of the flap 12, examples are used below for describing various connection manners supported by the optical cable connection apparatus 01.

### Example 1

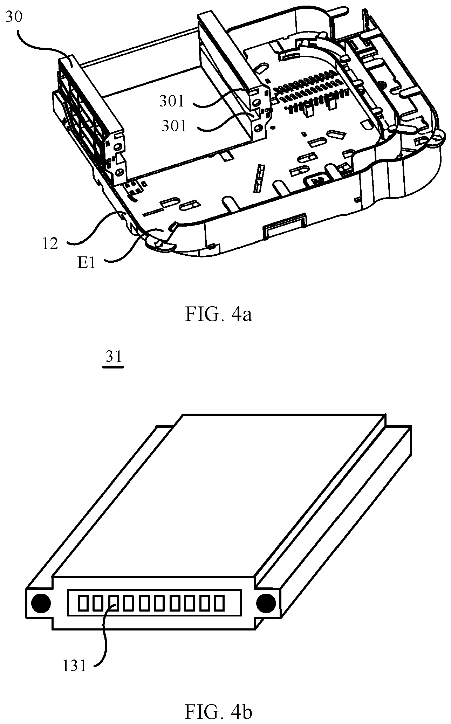

In this example, the optical fiber connection module 13 includes an optical splitter bracket 30 shown in FIG. 4a and at least one bracket-mounted optical splitter 31 shown in FIG. 4b. The optical splitter bracket 30 has at least one layer of mounting groove 301 (in FIG. 4a), and one bracket-mounted optical splitter 31 is mounted in one layer of mounting groove 301. In this case, the optical fiber connection module 13 may be an optical splitter that can perform fiber optical splitting.

When the optical splitter bracket 30 has at least one layer of mounting groove 301, an optical fiber interface 131 of a bracket-mounted optical splitter 31 in a lower-layer mounting groove 301 is close to the first surface E1 of the flap 12. Therefore, it is difficult to insert the optical fiber sub-assembly into the optical fiber interface 131.

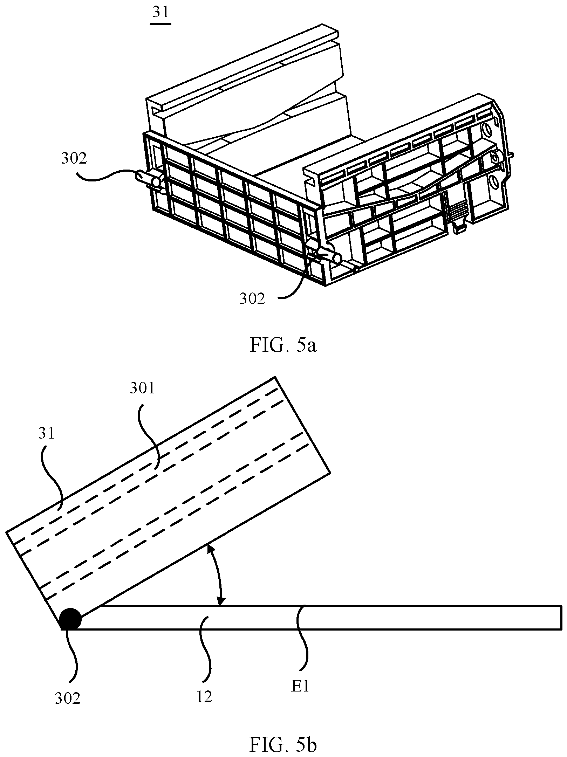

To resolve the foregoing problem, the optical fiber connection module 13 further includes a rotating shaft 302 shown in FIG. 5a. One end of the rotating shaft 302 is connected to the optical splitter bracket 30, and the other end of the rotating shaft 302 is connected to the flap 12. Then, as shown in FIG. 5b, the optical splitter bracket 30 may be rotationally connected to the flap 12 through the rotating shaft 302.

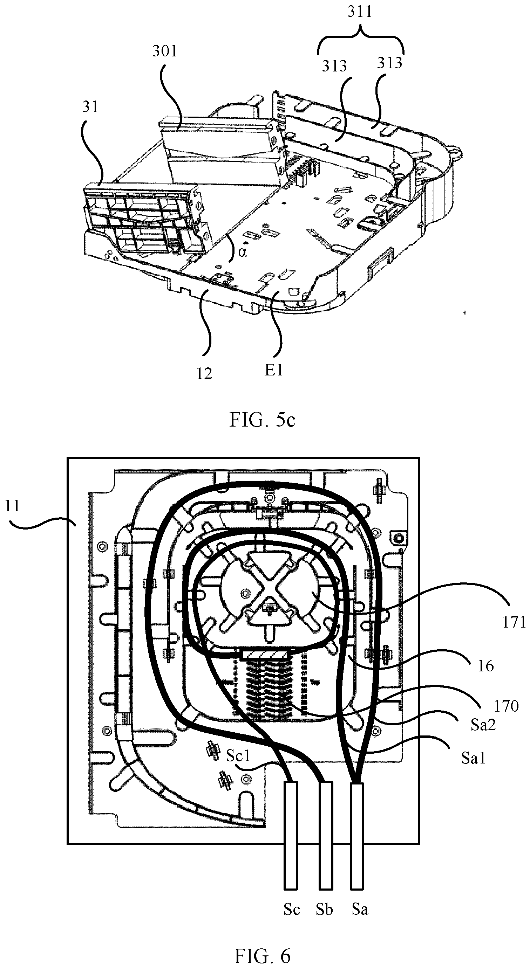

In this case, as shown in FIG. 5c, when the optical splitter bracket 30 rotates around the rotating shaft, an included angle α is formed between the optical splitter bracket 30 and the first surface E1 of the flap 12. Then, the included angle α is also formed between the bracket-mounted optical splitter 31 in the lower-layer mounting groove 301 and the first surface E1 of the flap 12. This expands operating space for an engineering person when the engineering person inserts the optical fiber sub-assembly into an optical splitter. Therefore, the engineering person can easily insert the optical fiber sub-assembly into the optical fiber interface 131 of the bracket-mounted optical splitter 31.

The following uses examples to describe optical cable connection manners used in the optical cable connection apparatus 01 provided in this example.

For example, when the straight-through cable and the branching cable are to be connected, as shown in FIG. 6, two straight-through cables, namely, an optical cable Sa1 and an optical cable Sa2, are separated from the main cable Sa provided by the optical cable provider. The optical cable Sa2 is not cut off, but is wound one or more turns and then led out of the bottom housing 11 as an optical cable Sb.

The optical cable Sa1 is cut off, and is connected to one end of an optical cable Sc1 through a fiber splicing process. A spliced part is slotted into the third fiber splicing slot 170 disposed on the splicing tray 16, to secure the spliced part. An extra part of a spliced optical cable is spooled onto the third fiber spool structure 171 on the splicing tray 16. The other end of the optical cable Sc1 is led out of the bottom housing 11 as a branching cable Sc.

It can be learned from the foregoing that a spliced part of the straight-through cable and the branching cable may be disposed in the third fiber splicing slot 170 on the splicing tray 16.

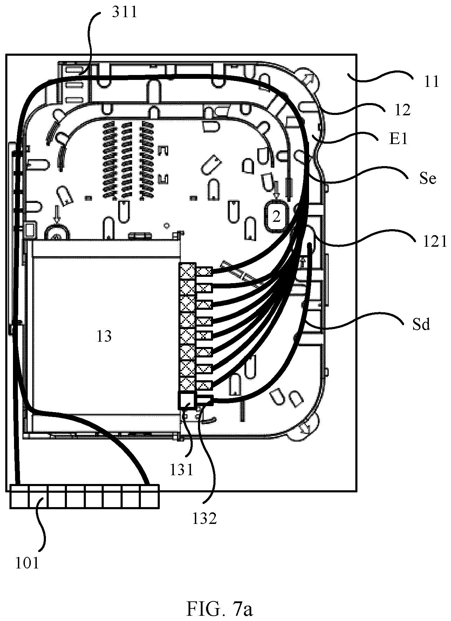

For another example, as shown in FIG. 7a, the optical fiber connection module 13 is disposed on the first surface E1 of the flap 12. The optical fiber connection module 13 may be an optical splitter including the optical splitter bracket 30 and the bracket-mounted optical splitter 31. One pigtail Sd is inserted into one optical fiber interface 131 of the optical splitter through the optical fiber sub-assembly 132. The optical fiber interface 131 that is coupled to the pigtail Sd and that is of the optical splitter is an input interface of the optical splitter.

As shown in FIG. 7a, a plurality of drop cables Se may be obtained at the other optical fiber interfaces 131 through optical splitting performed by the optical splitter. One end of each drop cable is inserted into one optical fiber interface 131 of the optical splitter through the optical fiber sub-assembly 132, and the other end of the drop cable is led out of the fiber leading-out hole 101 on the bottom housing 11 and is connected to one optical fiber inlet of a user. The optical fiber interfaces 131 of the optical splitter that are coupled to the plurality of drop cables Se are a plurality of output interfaces of the optical splitter.

In this case, the optical fiber sub-assembly 132 that is of the drop cable Se and that is coupled to the optical fiber interface 131 of the optical splitter may be an FMC. Alternatively, the drop cable Se may be a drop cable Se with a fast connector 132.

In some embodiments of this application, the optical cable connection apparatus 01 further includes a first optical fiber routing path 311 shown in FIG. 7a. The first optical fiber routing path 311 is disposed on the flap 12, and is configured to lead, to the first surface E1 of the flap 12, a drop cable Se that passes through the fiber leading-out hole 101 into the box body of the optical cable connection apparatus 01, so as to couple the drop cable Se to the optical fiber connection module 13 located on the first surface E1.

In some embodiments of this application, as shown in FIG. 5c, the first optical fiber routing path 311 may include two walls 313 that are adjacent but spaced apart from each other on the first surface E1 of the flap 12.

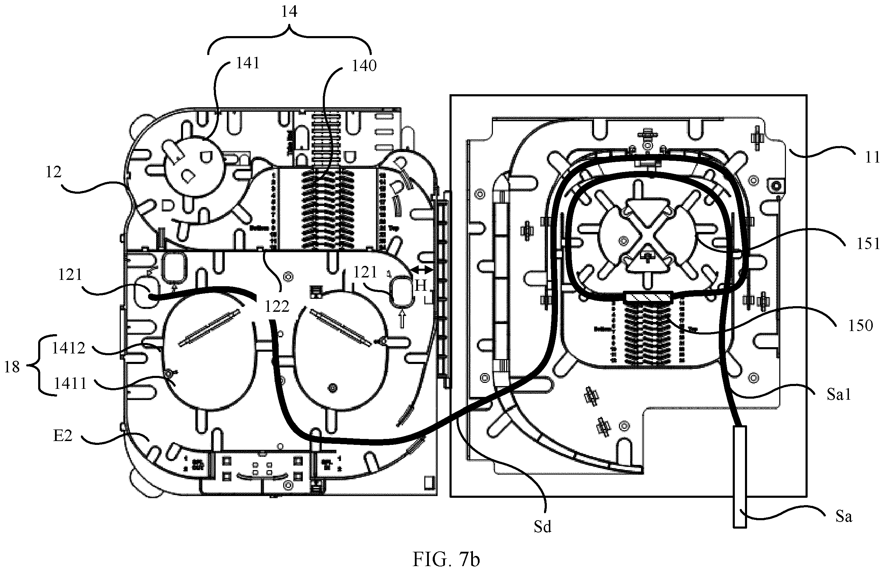

In addition, as shown in FIG. 7a, at least one cabling hole 121 is disposed on the flap 12. The cabling hole 121 penetrates the first surface E1 and the second surface E2 of the flap 12, and is configured to pass an optical fiber coupled to the optical fiber connection module 13. In this case, the other end of the pigtail Sd led out of the optical splitter may pass through the cabling hole 121 to the second surface E2 of the flap 12, as shown in FIG. 7b.

In some embodiments of this application, the optical cable connection apparatus 01 further includes at least one fourth fiber spool structure 18, as shown in FIG. 7b, disposed on the second surface E2 of the flap 12. The fourth fiber spool structure 18 includes a plurality of fiber spools 1411 and a plurality of fiber baffles 1412 connected to the fiber spools.

A position in which the fourth fiber spool structure 18 is located constitutes a fourth fiber spool area in the optical cable connection structure 01. An extra part of the pigtail Sd led out of the optical splitter may be spooled in the fourth fiber spool area.

As shown in FIG. 7b, after the extra part of the pigtail Sd is spooled onto the fourth fiber spool structure 18, the pigtail Sd is led to the bottom housing 11 and is connected, through a fiber splicing process, to the optical cable Sa1 separated from the main cable Sa provided by the optical cable provider. A spliced part is slotted into the second fiber splicing slot 150 disposed on the bottom housing 11. An extra part of a spliced optical cable is spooled onto the second fiber spool structure 151 on the bottom housing 11. In this way, the drop cable Se and the main cable Sa can be connected. For ease of description, the splicing tray 16 is not shown in FIG. 7b.

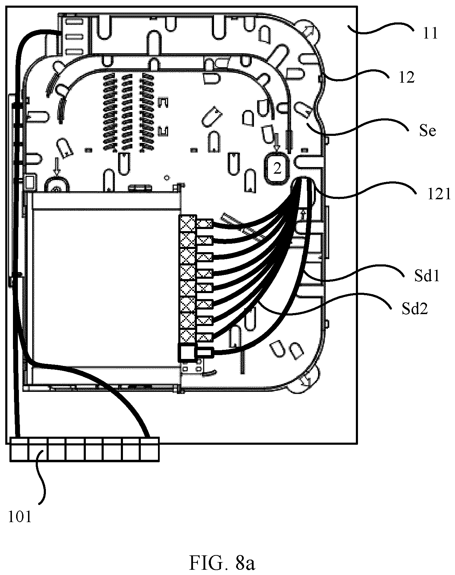

Alternatively, for another example, when a drop cable Se that passes through the fiber leading-out hole 101 into the box body of the optical cable connection apparatus 01 is not provided with the optical fiber sub-assembly 132, connection needs to be implemented through a fiber splicing process. A plurality of drop cables Se shown in FIG. 8a may be first led to the second surface E2 of the flap 12.

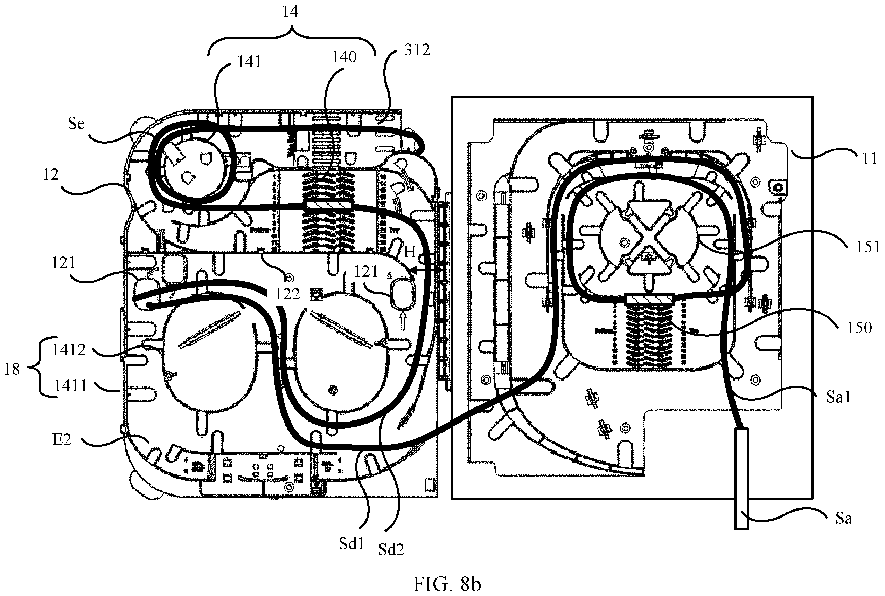

In some embodiments of this application, as shown in FIG. 8b, the optical cable connection apparatus 01 further includes a second optical fiber routing path 312 disposed on the flap 12. The second optical fiber routing path 312 is configured to lead the drop cable Se to the second surface E2 of the flap 12. A manner of disposing the second optical fiber routing path 312 is similar to a manner of disposing the first optical fiber routing path 311, and details are not described herein again.

In this case, each drop cable Se is connected to a pigtail Sd2 through a fiber splicing process. A spliced part is slotted into the first fiber splicing slot 140 disposed on the flap 12. An extra part of a spliced optical cable is spooled onto the first fiber spool structure 141 on the flap 12. In this way, the drop cable Se and the pigtail Sd2 are connected.

In addition, the optical cable connection apparatus 01 further includes a separation plate 122 disposed on the second surface E2 of the flap 12. The separation plate 122 is located between the first splicing assembly 14 and the fourth fiber spool structure 18, and is configured to separate the first splicing assembly 14 from the fourth fiber spool structure 18, resulting in neat cabling of an optical cable. Further, there is a cabling gap H between one end of the separation plate 122 and a side wall of the flap 12, to facilitate cabling of the optical cable on the second surface E2 of the flap 12.

In this case, each pigtail Sd2 that is spliced with the drop cable Se passes through the cabling gap H, and passes through the cabling hole 121 to the first surface E1 of the flap 12 shown in FIG. 8a after an extra part of the pigtail Sd2 is spooled onto the fourth fiber spool structure 18. Each pigtail Sd2 is inserted into one optical fiber interface 131 of the optical splitter through the optical fiber sub-assembly 132. Optical fiber interfaces 131 of the optical splitter that are coupled to a plurality of pigtails Sd2 are a plurality of output interfaces of the optical splitter.

As shown in FIG. 8a, the plurality of pigtail Sd2 are separated from one pigtail Sd1 through optical splitting performed by the optical splitter (optical fiber connection module 13). The pigtail Sd1 passes through the cabling hole 121 to the second surface E2 of the flap 12 shown in FIG. 8b, and is connected, through a fiber splicing process, to the straight-through cable Sa1 separated from the main cable Sa provided by the optical cable provider. A manner of connecting the pigtail Sd1 to the main cable Sa is the same as that described above, and details are not described herein again. The optical fiber interface 131 that is coupled to the pigtail Sd1 and that is of the optical splitter is an input interface of the optical splitter.

It can be learned from the foregoing that the optical splitter (optical fiber connection module 13) may be used to separate a plurality of pigtails Sd2 from one pigtail Sd1. The pigtail Sd1 is spliced with the main cable Sa, and each pigtail Sd2 is spliced with one drop cable Se. Therefore, the drop cable Se and the main cable Sa can be connected.

### Example 2

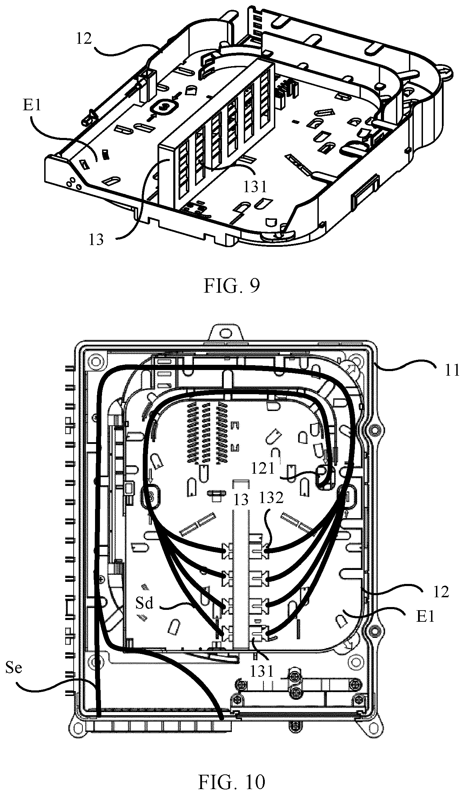

In this example, the optical fiber connection module 13 includes a termination panel disposed on the first surface E1 of the flap 12. A plurality of optical fiber interfaces 131 shown in FIG. 9 are disposed on both sides of the termination panel.

The following uses examples to describe optical cable connection manners used in the optical cable connection apparatus 01 provided in this example.

For example, as shown in FIG. 10, each drop cable Se that passes through the fiber leading-out hole 101 into the box body of the optical cable connection apparatus 01 is led to the first surface E1 of the flap 12, and is inserted into one optical fiber interface 131 at the right side of the termination panel (that is, the optical fiber connection module 13) by using the FMC or a pre-disposed optical fiber sub-assembly 132.

A plurality of pigtails Sd are coupled to the left side of the termination panel (that is, the optical fiber connection module 13). Each pigtail Sd passes through the cabling hole 121 to the second surface E2 of the flap 12, and is one-to-one connected, through a fiber splicing process with reference to a manner shown in FIG. 7b, to a plurality of straight-through cables Sa1 separated from the main cable Sa provided by the optical cable provider. A connection manner is the same as that described above, and details are not described herein again.

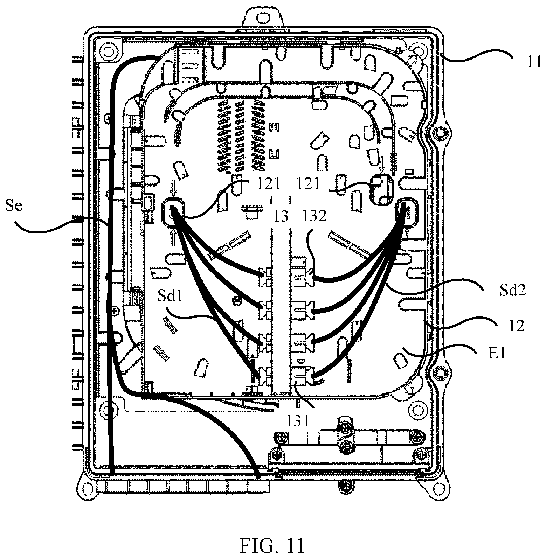

Alternatively, for another example, when a drop cable Se that passes through the fiber leading-out hole 101 into the box body of the optical cable connection apparatus 01 is not provided with the optical fiber sub-assembly 132, connection needs to be implemented through a fiber splicing process. A plurality of drop cables Se shown in FIG. 11 may be first led to the second surface E2 of the flap 12.

Then, each drop cable Se is connected to one pigtail Sd2 through the fiber splicing process with reference to a splicing manner shown in FIG. 8b. The pigtail Sd2 is led through a right-side cabling hole 121 shown in FIG. 11 to the first surface E1 of the flap 12. Each pigtail Sd2 is inserted into one optical fiber interface 131 at the right side of the termination panel (that is, the optical fiber connection module 13) by using the optical fiber sub-assembly 132.

A plurality of pigtails Sd1 are connected to the left side of the termination panel (that is, the optical fiber connection module 13). Each pigtail Sd1 is led through a left-side cabling hole 121 to the second surface E2 of the flap 12, and is one-to-one connected, through a fiber splicing process with reference to a manner shown in FIG. 7b, to a plurality of straight-through cables Sa1 separated from the main cable Sa provided by the optical cable provider. A connection manner is the same as that described above, and details are not described herein again.

It can be learned from the foregoing that a pigtail Sd2 connected to one optical fiber interface 131 at the right side of the termination panel (that is, the optical fiber connection module 13) is spliced with one drop cable Se. A pigtail Sd1 connected to one optical fiber interface 131 at the left side of the termination panel (that is, the optical fiber connection module 13) is spliced with one straight-through cable Sa1 separated from the main cable Sa. In this way, the drop cable Se and the main cable Sa can be connected.

In addition, in the optical cable connection apparatus 01 provided in this example, a manner of connecting the straight-through cable to the branching cable is the same as that in Example 1, and details are not described herein again.

### Example 3

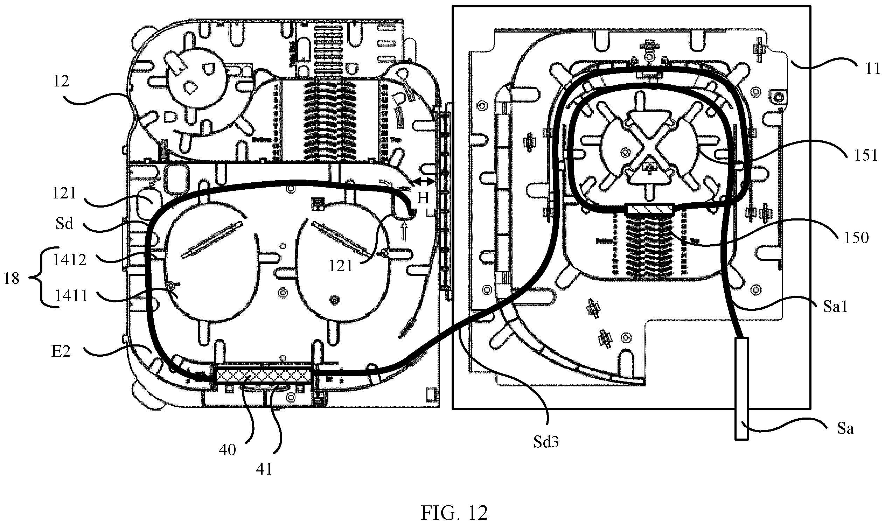

The optical fiber connection module 13 includes the termination panel shown in FIG. 10. In addition, the optical cable connection apparatus 01 further includes a micro optical splitter 40, as shown in FIG. 12, disposed on the second surface E2 of the flap 12. Outputs (at the left end) of the micro optical splitter 40 are configured to be one-to-one coupled to a plurality of optical fiber interfaces 131 that are on a same connection surface of the termination panel (that is, the optical fiber connection module 13).

In some embodiments of this application, to secure the micro optical splitter 40, the optical cable connection apparatus 01 further includes an optical splitter securing slot 41, as shown in FIG. 12, disposed on the second surface E2 of the flap 12. The micro optical splitter 40 is slotted into the optical splitter securing slot 41.

The following uses examples to describe optical cable connection manners used in the optical cable connection apparatus 01 provided in this example.

For example, as shown in FIG. 10, each drop cable Se that passes through the fiber leading-out hole 101 into the box body of the optical cable connection apparatus 01 is led to the first surface E1 of the flap 12, and is inserted into one optical fiber interface 131 at the right side of the termination panel (that is, the optical fiber connection module 13) by using the FMC or a pre-disposed optical fiber sub-assembly 132.

A plurality of pigtails Sd are connected to the left side of the termination panel (that is, the optical fiber connection module 13). Each pigtail Sd passes through the cabling hole 121 to the second surface E2 of the flap 12, and is coupled to the output (the left end) of the micro optical splitter 40 shown in FIG. 12.

An input (the right end) of the micro optical splitter 40 is connected to one pigtail Sd3, and the pigtail Sd3 may be separated into a plurality of pigtails Sd at the outputs through optical splitting performed by the micro optical splitter 40. In addition, with reference to a manner shown in FIG. 7b, the pigtail Sd3 is connected, through the fiber splicing process, to one straight-through cable Sa1 in the main cable Sa provided by the optical cable provider. A connection manner is the same as that described above, and details are not described herein again.

Alternatively, for another example, when a drop cable Se that passes through the fiber leading-out hole 101 into the box body of the optical cable connection apparatus 01 is not provided with the optical fiber sub-assembly 132, connection needs to be implemented through a fiber splicing process. A plurality of drop cables Se shown in FIG. 11 may be first led to the second surface E2 of the flap 12.

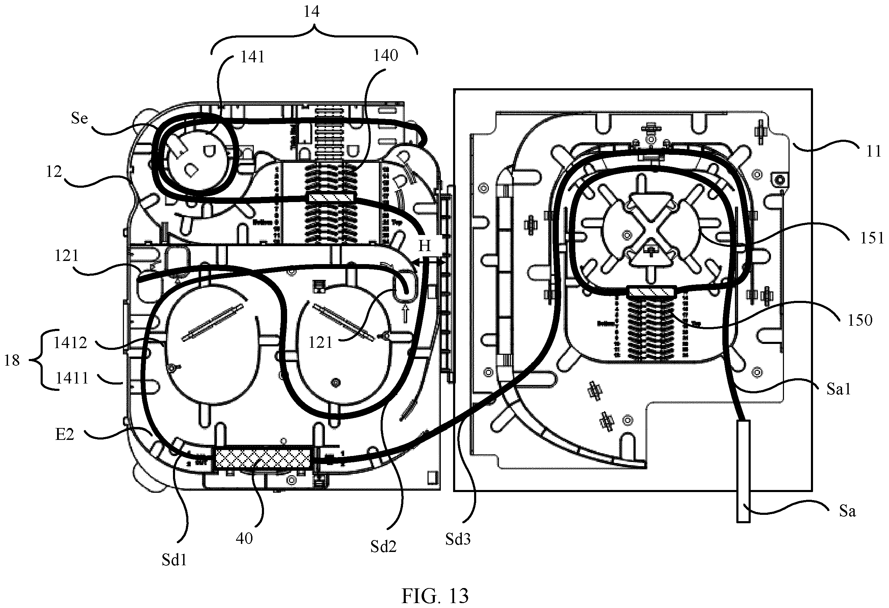

Then, as shown in FIG. 13, each drop cable Se is connected to one pigtail Sd2 through the fiber splicing process. The pigtail Sd2 is led through a left-side cabling hole 121 shown in FIG. 13 to the first surface E1 of the flap 12. Each pigtail Sd2 is inserted into one optical fiber interface 131 at the right side of the termination panel (that is, the optical fiber connection module 13) by using the optical fiber sub-assembly 132 (as shown in FIG. 11).

In FIG. 11, a plurality of pigtails Sd1 are connected to the left side of the termination panel (that is, the optical fiber connection module 13). Each pigtail Sd1 is led through a left-side cabling hole 121 to the second surface E2 of the flap 12. Then, the pigtail Sd1 is coupled to an output (the left end) of the micro optical splitter 40 shown in FIG. 13.

An input (the right end) of the micro optical splitter 40 is connected to one pigtail Sd3, and the pigtail Sd3 may be separated into a plurality of pigtails Sd at outputs through optical splitting performed by the micro optical splitter 40. In addition, with reference to a manner shown in FIG. 7b, the pigtail Sd3 is connected, through the fiber splicing process, to one straight-through cable Sa1 in the main cable Sa provided by the optical cable provider. A connection manner is the same as that described above, and details are not described herein again.

It can be learned from the foregoing that in FIG. 11, a pigtail Sd2 connected to one optical fiber interface 131 at the right side of the termination panel (that is, the optical fiber connection module 13) is spliced with one drop cable Se. A pigtail Sd1 connected to one optical fiber interface 131 at the left side of the termination panel (that is, the optical fiber connection module 13) is coupled to the input of the micro optical splitter 40 shown in FIG. 13. In addition, the pigtail Sd3 coupled to the input of the micro optical splitter 40 is spliced with one straight-through cable Sa1 separated from the main cable Sa. In this way, the drop cable Se and the main cable Sa can be connected.

In addition, in the optical cable connection apparatus 01 provided in this example, a manner of connecting the straight-through cable to the branching cable is the same as that in Example 1, and details are not described herein again.

For the optical cable connection apparatus 01 provided in any one of the foregoing examples, the fiber leading-out hole 101 of the optical cable connection apparatus 01 needs to be sealed before a user enables a service, so that the optical cable connection apparatus 01 features an ingress protection rating (ingress protection rating, IP rating). After the user enables the service, a drop cable passing through the fiber leading-out hole 101 is to be supported and secured. The optical cable connection apparatus 01 provided in this embodiment of this application further includes a plurality of optical cable securing structures 20. One optical cable securing structure 20 is located in one fiber leading-out hole 101 shown in FIG. 1a, and fits the fiber leading-out hole 101.

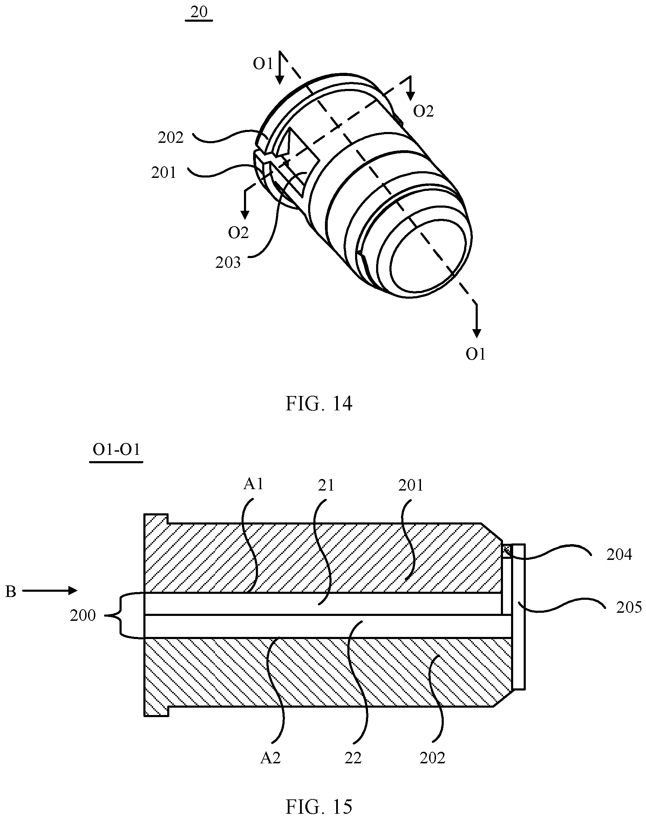

A structure of the optical cable securing structure 20 is shown in FIG. 14, and includes a first clamping member 201 and a second clamping member 202 that are clamped together. In addition, as shown in FIG. 15 (which is a cutaway drawing obtained by cutting along a dashed line O1-O1 in FIG. 14), there is a first cable passing structure 21 on a first fitting surface A1 of the first clamping member 201. There is a second cable passing structure 22 on a second fitting surface A2 of the second clamping member 202.

In this case, after the first clamping member 201 and the second clamping member 202 are clamped together, the first cable passing structure 21 and the second cable passing structure 22 are aligned to form a cable channel 200 configured to pass the drop cable. The cable channel 200 is in interference fit with the drop cable.

It should be noted that when the first clamping member 201 and the second clamping member 202 are clamped together, the first fitting surface A1 of the first clamping member 201 is a surface that is of the first clamping member 201 and that faces the second clamping member 202. The second fitting surface A2 of the second clamping member 202 is a surface that is of the second clamping member 202 and that faces the first clamping member 201. In this way, after the first clamping member 201 and the second clamping member 202 are clamped together, at least a part of the first fitting surface A1 touches at least a part of the second fitting surface A2, to secure an optical cable (the foregoing drop cable) to the cable channel 200 between the first clamping member 201 and the second clamping member 202. Therefore, in this embodiment of this application, the first fitting surface A1 is referred to as a surface that is of the first clamping member 201 and that is used to secure the drop cable. The second fitting surface A2 is referred to as a surface that is of the second clamping member 202 and that is used to secure the drop cable.

In addition, to ensure that the first clamping member 201 and the second clamping member 202 can be secured after being clamped together, the optical cable securing structure 20 further includes a fastener 203 shown in FIG. 14.

The first clamping member 201 and the second clamping member 202 can be clamped together by the fastener 203 and are detachably connected. After the first clamping member 201 and the second clamping member 202 are connected by the fastener 203, at least a part of the first fitting surface A1 of the first clamping member 201 touches at least a part of the second fitting surface A2 of the second clamping member 202 by the fastener; and the first cable passing structure 21 of the first clamping member 201 and the second cable passing structure 22 of the second clamping member 202 are aligned to form the cable channel 200.

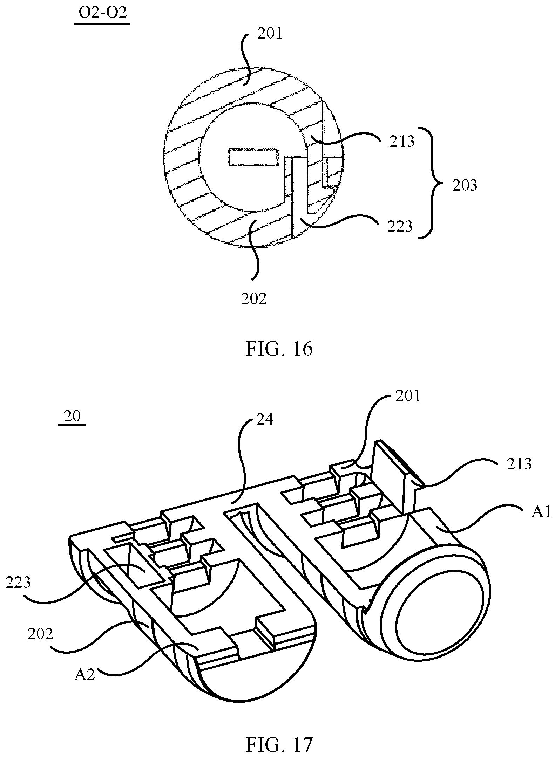

As shown in FIG. 16 (which is a cutaway drawing obtained by cutting along a dashed line O2-O2 shown in FIG. 14), the fastener 203 includes a buckle 213 and a slot 223 that are buckled together. In some embodiments of this application, as shown in FIG. 17, the buckle 213 is connected to the first clamping member 201, and the slot 223 is located on the second fitting surface A2 of the second clamping member 202. The buckle 213 and the slot 223 cooperate with each other to implement a detachable connection between the first clamping member 201 and the second clamping member 202.

For example, after the first clamping member 201 and the second clamping member 202 are clamped together, the buckle 213 connected to the first clamping member 201 is buckled into the slot 223, and is in interference fit with the slot 223. Then, the first clamping member 201 is connected to the second clamping member 202.

Alternatively, when the first clamping member 201 needs to be separated from the second clamping member 202, a user may apply an external force, to detach the buckle 213 from the slot 223 and then separate the first clamping member 201 from the second clamping member 202.

In some other embodiments of this application, the buckle 213 may be connected to the second clamping member 202, and the slot 223 is located on the first fitting surface A1 of the first clamping member 201. In this case, a process in which the first clamping member 201 and the second clamping member 202 are detachably connected by the fastener 203 that includes the buckle 213 and the slot 223 is the same as that described above, and details are not described herein again.

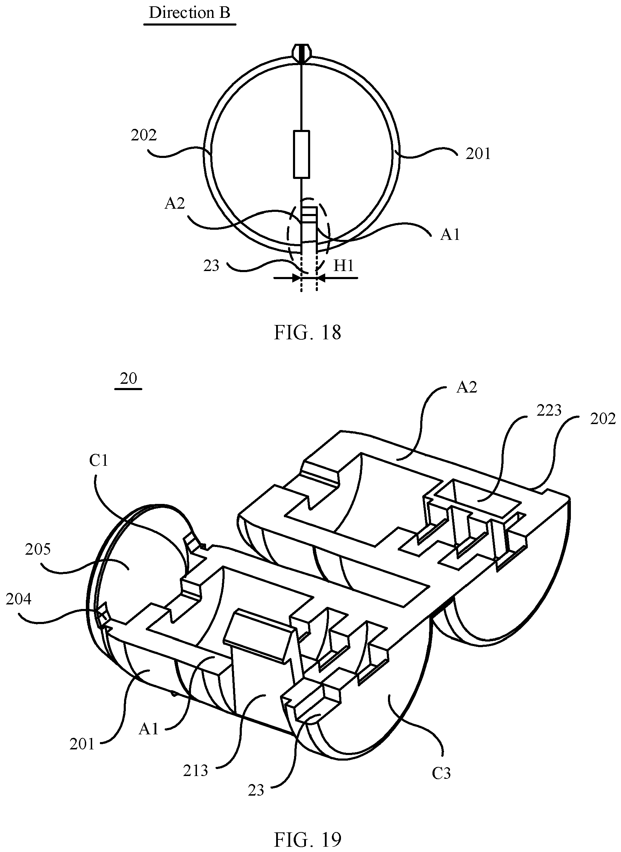

In addition, as shown in FIG. 18 (which is a schematic diagram obtained by viewing along a direction B shown in FIG. 15), the optical cable securing structure 20 further includes an opening groove 23, to help an engineering person apply an external force to separate the first clamping member 201 from the second clamping member 202. For example, as shown in FIG. 19, the opening groove 23 may be disposed on the first fitting surface A1 of the first clamping member 201. To be specific, a notch formed on the first fitting surface A1 is used as the opening groove 23.

In this case, as shown in FIG. 18, a gap H1 is formed between a groove bottom (which is located in the first fitting surface A1 of the first clamping member 201) of the opening groove 23 and the second fitting surface A2 of the second clamping member 202 when the first clamping member 201 and the second clamping member 202 are clamped together. Therefore, the engineering person may use an external tool, such as a screwdriver, to reach inside of the gap H1. Then, an external force is applied to the screwdriver to detach the buckle 213 from the slot 223, so as to separate the first clamping member 201 from the second clamping member 202.

Alternatively, in some other embodiments of this application, the opening groove 23 may be disposed on the second fitting surface A2 of the second clamping member 202. To be specific, a notch formed on the second fitting surface A2 is used as the opening groove 23. In this case, a gap H1 is formed between a groove bottom (which is located in the second fitting surface A2 of the second clamping member 202) of the opening groove 23 and the first fitting surface A1 of the first clamping member 201 when the first clamping member 201 and the second clamping member 202 are clamped together.

It can be learned from the foregoing that the first clamping member 201 may be separated from the second clamping member 202 with an external force. In view of this, as shown in FIG. 17, the optical cable securing structure further includes a connection rod 24, to reduce a probability that the first clamping member 201 and the second clamping member 202 are lost after separation.

The connection rod 24 is located between the first clamping member 201 and the second clamping member 202. One end of the connection rod 24 is connected to the first clamping member 201, and the other end of the connection rod 24 is connected to the second clamping member 202. In this way, the first clamping member 201 and the second clamping member 202 can still be connected by the connection rod 24, even if the first fitting surface A1 of the first clamping member 201 no longer touches the second fitting surface A2 of the second clamping member 202 because an external force is applied to detach the buckle 213 connected to the first clamping member 201 from the slot 223 disposed on the second clamping member 202. This reduces a probability of losing a component during construction or maintenance of the optical cable connection apparatus 01 performed by the worker.

In some embodiments of this application, materials of the first clamping member 201, the second clamping member 202, and the connection rod 24 may be injection molding plastic. In this case, an injection mold is designed to manufacture, in one injection molding process, an optical cable securing structure 20 that integrates the first clamping member 201, the second clamping member 202, and the connection rod 24.

On this basis, before the user enables the service in fiber to the home, as shown in FIG. 19, the optical cable securing structure 20 further includes a tearing member 204 and a protection cover 205, to seal the fiber leading-out hole 101 of the optical cable connection apparatus 01.

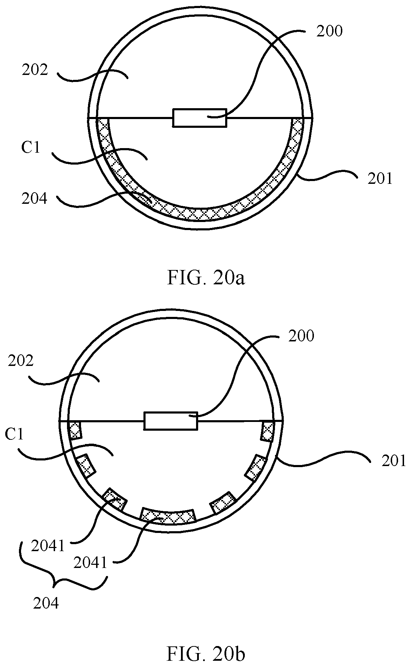

The tearing member 204 is connected to a first end face C1 that is of the first clamping member 201 and that is configured to lead out the optical cable. In some embodiments of this application, as shown in FIG. 20a, when the first clamping member 201 and the second clamping member 202 are clamped together, the tearing member 204 may be located around a mouth of the cable channel 200 that is configured to pass the drop cable and that is formed by aligning the first cable passing structure 21 and the second cable passing structure 22 that are shown in FIG. 15.

In addition, as shown in FIG. 19, one part of the protection cover 205 is connected to the tearing member 204, and the other part of the protection cover 205 protrudes from the first end face C1. In addition, when the first clamping member 201 and the second clamping member 202 are clamped together by the fastener 203, the protection cover 205 covers the mouth of the cable channel 200 (as shown in FIG. 20a). In addition, the tearing member 204 and the protection cover 205 are further used to seal the cable channel 200. In this way, when the user does not need to enable the service, the protection cover 205 is used to block the cable channel 200, so that the drop cable cannot be led through the optical cable securing structure 20 out of the fiber leading-out hole 101 on the bottom housing of the optical cable connection apparatus 01. Therefore, the optical cable connection apparatus 01 is internally sealed, to feature the ingress protection rating (ingress protection rating, IP rating).

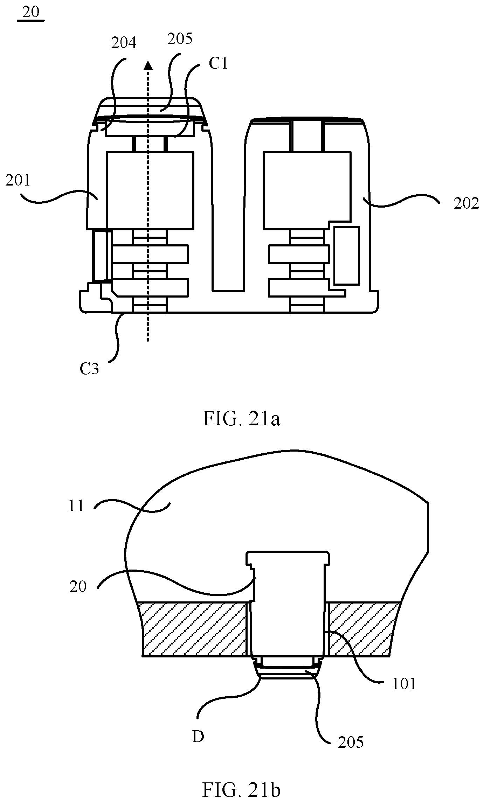

It should be noted that, as shown in FIG. 21a, the first end face C1 and a third end face C3 of the first clamping member 201 are disposed opposite to each other. The first end face C1 and the third end face C3 intersect with a cabling direction (a direction indicated by a dashed arrow in FIG. 21a) of the drop cable. For example, the first end face C1 and the third end face C3 are perpendicular to the cabling direction of the drop cable.

In addition, as shown in FIG. 21b, when the optical cable securing structure 20 is mounted in the fiber leading-out hole 101 on the bottom housing 11, one end, at which the protection cover 205 is located, of the optical cable securing structure 20 is located at an outer side of the bottom housing 11. Therefore, in this application, the first end face C1 that is of the first clamping member 201 shown in FIG. 21a and that is connected to the protection cover 205 through the tearing member 204 is referred to as one end that is of the first clamping member 201 and that is configured to lead out the optical cable. Because the first end face C1 and the third end face C3 are disposed opposite to each other, the third end face C3 is the other end that is of the first clamping member 201 and that is configured to lead in the optical cable.

On this basis, to facilitate mounting the optical cable securing structure 20 in the fiber leading-out hole 101 on the bottom housing 11, as shown in FIG. 21b, a chamfer D is disposed on one surface that is of the protection cover 205 and that is away from the bottom housing 11 or away from the first clamping member 201 and the second clamping member 202 of the optical cable securing structure 20. For example, the chamfer D may be 45°.

In this way, when the engineering person leads, out of the fiber leading-out hole 101 from inside the bottom housing 11, an end that is of the optical cable securing structure 20 and at which the protection cover 205 is located, the chamfer D is used as a guide, so that the entire optical cable securing structure 20 can enter the fiber leading-out hole 101 more easily.

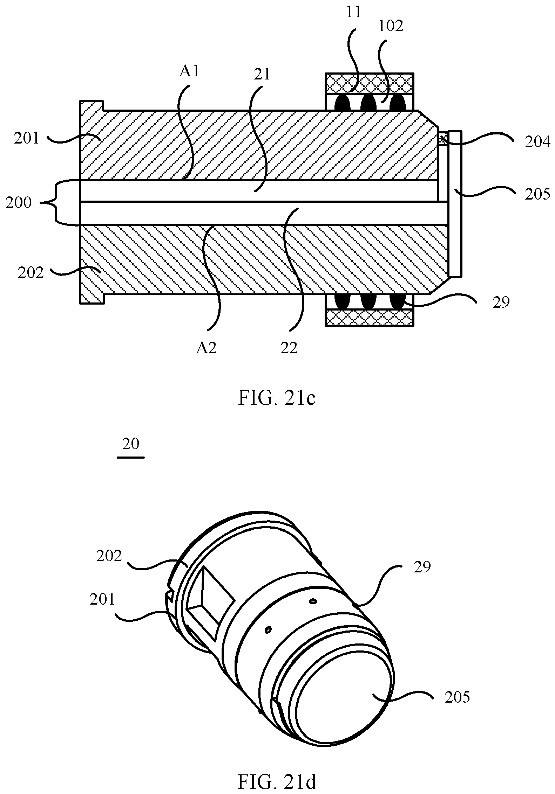

In addition, after the optical cable securing structure 20 is mounted in the fiber leading-out hole 101 on the bottom housing 11, the optical cable securing structure 20 further includes a plurality of second limiting bumps 29 shown in FIG. 21c, to limit the optical cable securing structure 20 and reduce a probability that the optical cable securing structure 20 moves.

The second limiting bump 29 is disposed on a part that is of a surface, away from the first fitting surface A1, of the first clamping member 201 and that is configured to fit the fiber leading-out hole 101. In addition, the second limiting bump 29 is also disposed on a part that is of a surface, away from the second fitting surface A2, of the second clamping member 202 and that is configured to fit the fiber leading-out hole 101.

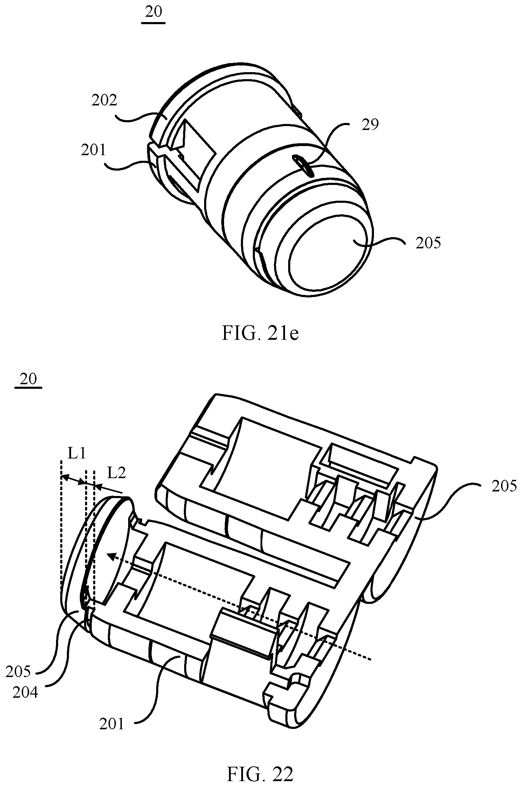

In some embodiments of this application, as shown in FIG. 21d, the second limiting bump 29 may be a bump dot. Alternatively, in some other embodiments of this application, as shown in FIG. 21e, the second limiting bump 29 may be a strip-shaped bump rib.

It should be noted that the foregoing descriptions are based on an example in which the fiber leading-out hole 101 is a circle. In this case, to fit a shape of the fiber leading-out hole 101, the first clamping member 201 and the second clamping member 202 are semi-cylinders shown in FIG. 19, so that the optical cable securing structure 20 formed by clamping the first clamping member 201 and the second clamping member 202 together is a cylinder shown in FIG. 21e.

It can be learned from the foregoing that the tearing member 204 is connected to the protection cover 205 configured to block the mouth of the cable channel 200 leading through the drop cable. Therefore, when the user needs to enable the service, the worker may tear off the protection cover 205 at a position of the tearing member 204, to expose the mouth of the cable channel 200 that is originally blocked by the protection cover 205. This helps the drop cable be led out of the box body of the optical cable connection apparatus 01 and be connected to one optical fiber inlet of the user.

To facilitate tearing off the protection cover 205, in some embodiments of this application, as shown in FIG. 20a, the tearing member 204 may be strip-shaped, and is disposed along the edge of the first end face C1 (an end face facing the protection cover) of the first clamping member 201. In this case, when the protection cover 205 is connected to the tearing member 204, the tearing member 204 is also located along the edge of the protection cover 205. This enlarges a contact area between a finger of the worker and the protection cover 205, and a force can be more easily applied to the protection cover 205, to tear off the protection cover 205.

Alternatively, in some other embodiments of this application, as shown in FIG. 20b, the tearing member 204 may include at least two connection posts 2041 disposed at intervals. The connection posts 2041 may be located along the edge of the first end face C1 of the first clamping member 201. Therefore, when the protection cover 205 is connected to the tearing member 204, the connection posts 2041 of the tearing member 204 are also located along the edge of the protection cover 205, to facilitate tearing off the protection cover 205 by the engineering person.

In addition, because the at least two connection posts 2041 of the tearing member 204 are disposed at intervals, a gap is formed between two adjacent connection posts 2041. This may reduce a contact area between the entire tearing member 204 and the protection cover 205, and therefore the engineering person can more easily tear off the protection cover 205.

In some embodiments of this application, for either the tearing member 204 in FIG. 20a or that in FIG. 20b, a thickness L2 of the tearing member 204 is less than a thickness L1 of the protection cover 205 along a cabling direction (a direction shown by a dashed arrow in FIG. 22) of the optical cable, as shown in FIG. 22. In this case, the tearing member 204 with a smaller thickness has reduced strength of materials, and therefore the engineering person can more easily tear off the protection cover 205.

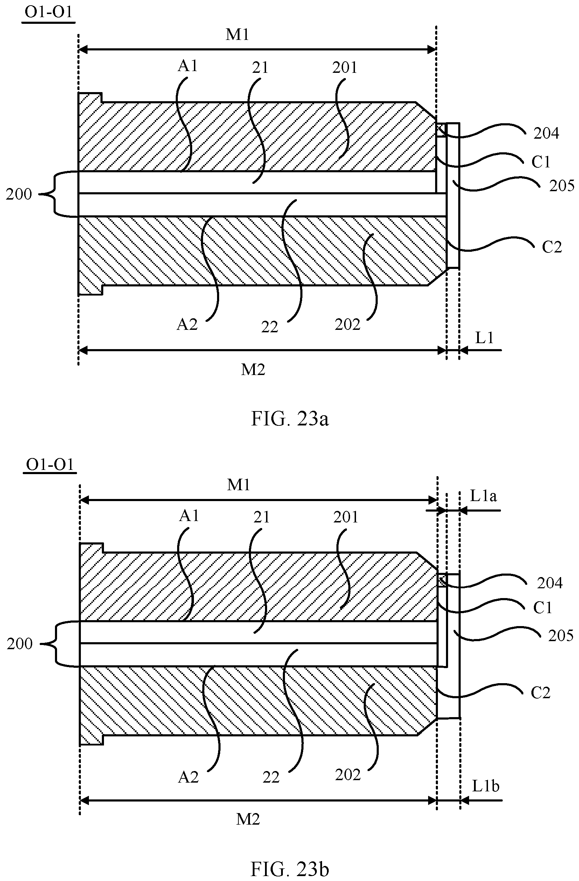

It can be learned from the foregoing that one part of the protection cover 205 is connected to the tearing member 204, and the other part of the protection cover 205 protrudes from the first end face C1. Therefore, when the first clamping member 201 and the second clamping member 202 are clamped together, the part that is of the protection cover 205 and that protrudes from the first end face C1 can be used to block the mouth of the cable channel 200 (as shown in FIG. 20a). To enhance an effect of blocking the mouth of the cable channel 200 by the protection cover 205, after the first clamping member 201 and the second clamping member 202 are clamped together, the part that is of the protection cover 205 and that protrudes from the first end face C1 of the first clamping member 201 touches a second end face C2 that is of the second clamping member 202 and that is used for leading out the optical cable, as shown in FIG. 23a (which is a cutaway drawing obtained by cutting along the dashed line O1-O1 shown in FIG. 14).

In some embodiments of this application, as shown in FIG. 23a, the thickness L1 of the protection cover 205 may be uniform. In this case, a length M2 of the second clamping member 202 may be greater than a length M1 of the first clamping member 201, so that the second end face C2 of the second clamping member 202 touches the part that is of the protection cover 205 and that protrudes from the first end face C1 of the first clamping member 201.

Alternatively, in some other embodiments of this application, a length M2 of the second clamping member 202 is equal to a length M1 of the first clamping member 201, as shown in FIG. 23b (which is a cutaway drawing obtained by cutting along the dashed line O1-O1 shown in FIG. 14). In this case, a thickness L1b of a contact part at which the protection cover 205 touches the second end face C2 of the second clamping member 202 is greater than a thickness L1a of a contact part at which the protection cover 205 touches the first end face C1 of the first clamping member 201, so that the second end face C2 of the second clamping member 202 touches the part that is of the protection cover 205 and that protrudes from the first end face C1 of the first clamping member 201.

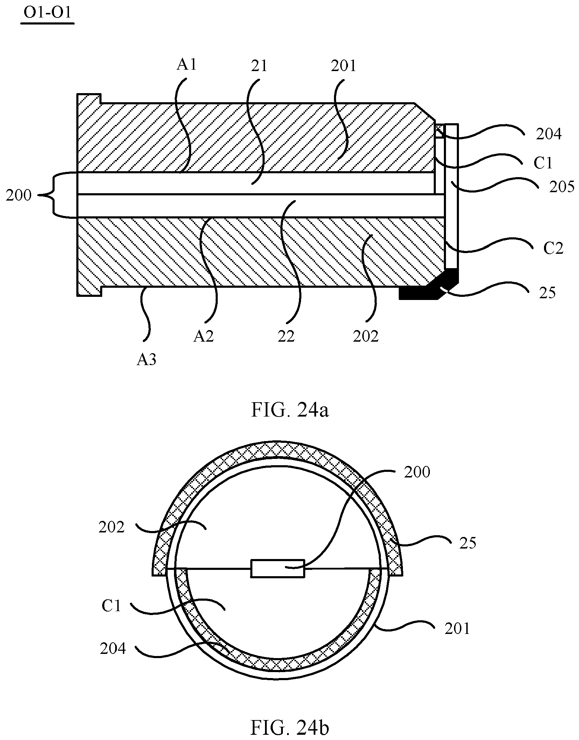

In addition, before a user enables a service, the optical cable securing structure 20 further includes a wrapping member 25 shown in FIG. 24a (which is a cutaway drawing obtained by cutting along the dashed line O1-O1 shown in FIG. 14), to further improve the IP rating of the optical cable connection apparatus 01 and sealing performance of the optical cable securing structure 20 in sealing the fiber leading-out hole 101 of the optical cable connection apparatus 01.

The wrapping member 25 is connected to the part that is of the protection cover 205 and that protrudes from the first end face C1 of the first clamping member 201. In addition, when the first clamping member 201 and the second clamping member 202 are clamped together, the wrapping member 25 wraps a surface A3 that is of the second clamping member 202 and that is away from the second fitting surface A2.

In this case, as shown in FIG. 24b, when the wrapping member 25 is strip-shaped and disposed along the edge of the protection cover (not shown in FIG. 24b), a first end (the left end) of the wrapping member 25 covers a first end (the left end) of the tearing member 204, and a second end (the right end) of the wrapping member 25 covers a second end (the right end) of the tearing member 204.

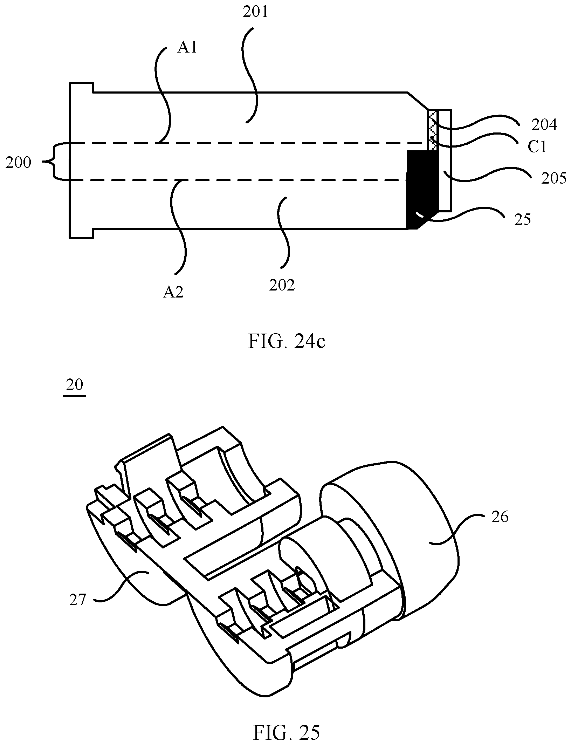

In this way, as shown in FIG. 24c, a component including the tearing member 204 and the wrapping member 25 that are connected to the protection cover 205 can fully enclose a periphery of one end, close to the protection cover 205, of a structure obtained after the first clamping member 201 and the second clamping member 202 are clamped together. Therefore, the cable channel 200 formed between the first clamping member 201 and the second clamping member 202 is better sealed at a mouth close to the protection cover 205.

The protection cover 205, the tearing member 204, the wrapping member 25, the first clamping member 201, and the second clamping member 202 may all be made of plastic materials. Therefore, the optical cable securing structure 20 formed using one patterning process integrates all components. Therefore, the integrated optical cable securing structure 20 can reduce a probability of losing a component during construction or maintenance of the optical cable connection apparatus 01 performed by the worker, compared with FIG. 25 in which two separate components, namely, a rubber part 26 and a plastic part 27, are combined to form a separated optical cable securing structure 20. In addition, when all components in the integrated optical cable securing structure 20 provided in this application are made of plastic materials, the rubber part 26 made of rubber materials may be prevented from relaxation caused by creep of the rubber part 26 during long-term use.

Further, in FIG. 25, after the user enables the service, a knife needs to be used to cut the rubber part 26 apart along an axis, so as to lead the drop cable through the rubber part 26. According to the integrated optical cable securing structure 20 provided in this embodiment of this application, after the user enables the service, the engineering person only needs to tear off the protection cover 205 without using a knife. Therefore, the optical fiber can be led to the home more easily.

It can be learned from the foregoing that when the user enables the service and after the first clamping member 201 and the second clamping member 202 are clamped together, the first cable passing structure 21 of the first clamping member 201 and the second cable passing structure 22 of the second clamping member 202 can be aligned to form the cable channel 200 to pass the drop cable. The cable channel 200 may be used to support and secure the drop cable. The following uses examples to describe structures of the first cable passing structure 21 and the second cable passing structure 22.

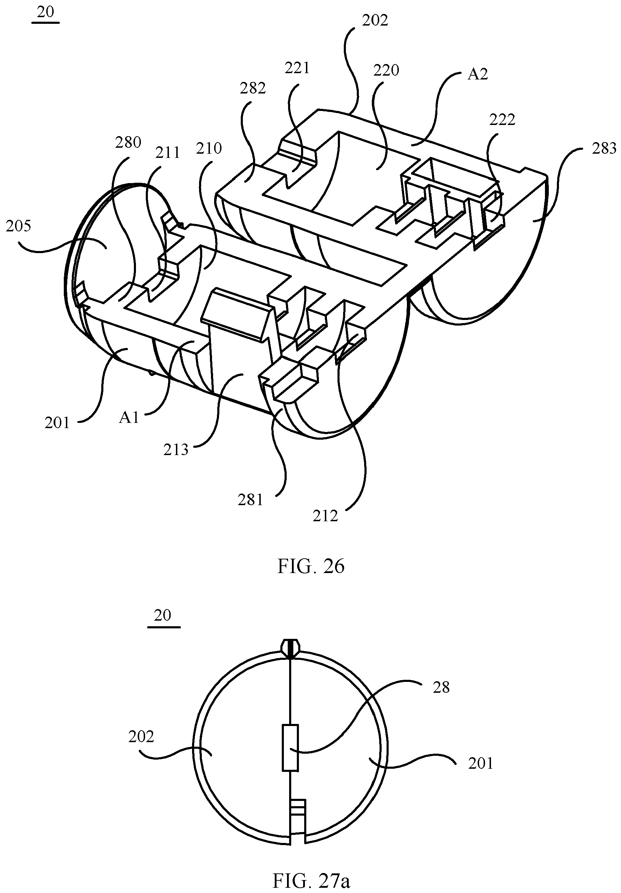

For example, the first cable passing structure 21 of the first clamping member 201 includes a first trough 210, a first cabling groove 211, and a first clamping groove 212, as shown in FIG. 26.

The first trough 210 is disposed on the first fitting surface A1 of the first clamping member 201, and includes a first exit side wall 280 close to the protection cover 205 and a first entrance side wall 281 away from the protection cover 205. The first cabling groove 211 is disposed on the first exit side wall 280 and communicates with the first trough 210. The first clamping groove 212 is disposed on the first entrance side wall 281 and communicates with the first trough 210.

In this way, the first cabling groove 211, the first clamping groove 212, and the first trough 210 that communicates with each other constitute the first cable passing structure 21 of the first clamping member 201.

In addition, the second cable passing structure 22 of the second clamping member 202 includes a second trough 220, a second cabling groove 221, and a second clamping groove 222, as shown in FIG. 26.

The second trough 220 is disposed on the second fitting surface A2 of the second clamping member 202, and includes a second exit side wall 282 close to the protection cover 205 and a second entrance side wall 283 away from the protection cover 205. In addition, the second cabling groove 221 is disposed on the second exit side wall 282 and communicates with the second trough 220. The second clamping groove 222 is disposed on the second entrance side wall 283 and communicates with the second trough 220.

In this way, the second trough 220, the second cabling groove 221, and the second clamping groove 222 that communicates with each other constitute the second cable passing structure 22 of the second clamping member 202.

In this case, after the first clamping member 201 and the second clamping member 202 are clamped together, the first cabling groove 211 and the second cabling groove 221 are aligned to form a through hole 28 shown in FIG. 27a. The through hole 28 is configured to be in clearance fit with a drop cable. This helps lead the drop cable out of the optical cable securing structure 20. In addition, a shape of the through hole 28 formed by aligning the first cabling groove 211 and the second cabling groove 221 may match a shape of a cross-section of the drop cable.

For example, when the drop cable is a butterfly-shape cable or a flat cable, the through hole 28 may be a rectangle shown in FIG. 27a.

It should be noted that the foregoing embodiment is described by using an example in which a rectangular through hole 28 is formed by aligning the first cabling groove 211 and the second cabling groove 221. Depths of the first cabling groove 211 and the second cabling groove 221 are not limited in this application. In some other embodiments of this application, the first cabling groove 211 may alternatively be disposed only on the first exit side wall 280 of the first clamping member 201. In this way, when the first clamping member 201 and the second clamping member 202 are clamped together, a rectangular through hole 28 may also be formed between the first cabling groove 211 and a surface that is of the second exit side wall 282 and that faces a groove bottom of the first cabling groove 211. Similarly, the second cabling groove 221 may alternatively be disposed only on the second exit side wall 282 of the second clamping member 202. In this way, when the first clamping member 201 and the second clamping member 202 are clamped together, a rectangular through hole 28 may also be formed between the second cabling groove 221 and a surface that is of the first exit side wall 280 and that faces a groove bottom of the second cabling groove 221.

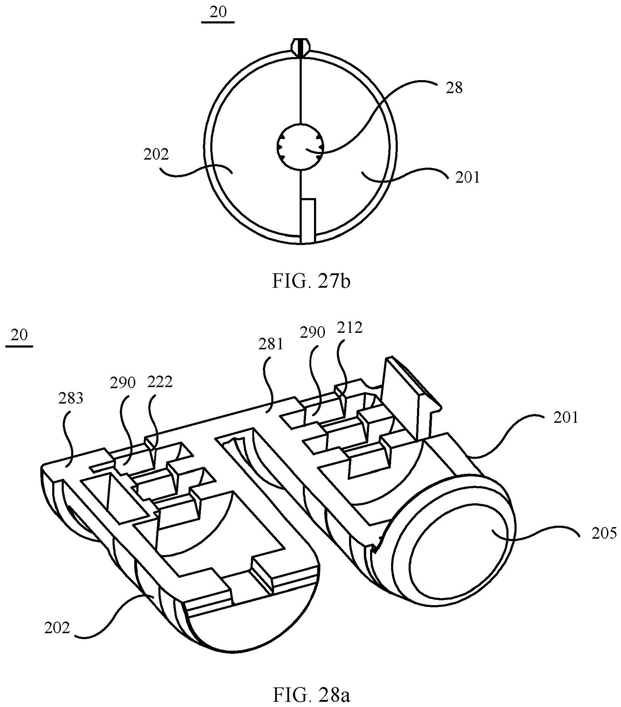

Alternatively, for another example, when the drop cable is a round cable, the through hole 28 may be a circle shown in FIG. 27b.

It addition, after the first clamping member 201 and the second clamping member 202 are clamped together, as shown in FIG. 28a, the optical cable securing structure 20 further includes at least one first limiting bump 290 disposed on a groove bottom of the first clamping groove 212 and at least one first limiting bump 290 disposed on a groove bottom of the second clamping groove 222, to limit the drop cable in the cable channel 200 formed by aligning the first cable passing structure 21 of the first clamping member 201 and the second cable passing structure 22 of the second clamping member 202. This enables an interference fit between the cable channel 200 and the drop cable and reduces a probability that the drop cable moves when being used by a user.

The first limiting bump 290 is configured to limit the drop cable. After the first clamping member 201 and the second clamping member 202 are clamped together, the first limiting bump 290 may enable an interference fit between the drop cable and a through hole formed by aligning the first clamping groove 212 having the first limiting bump 290 and the second clamping groove 222 having the first limiting bump 290. This reduces a probability that the drop cable moves in the optical cable securing structure 20.

In addition, the drop cable may be supported by the through hole formed by aligning the first clamping groove 212 having the first limiting bump 290 and the second clamping groove 222 having the first limiting bump 290.

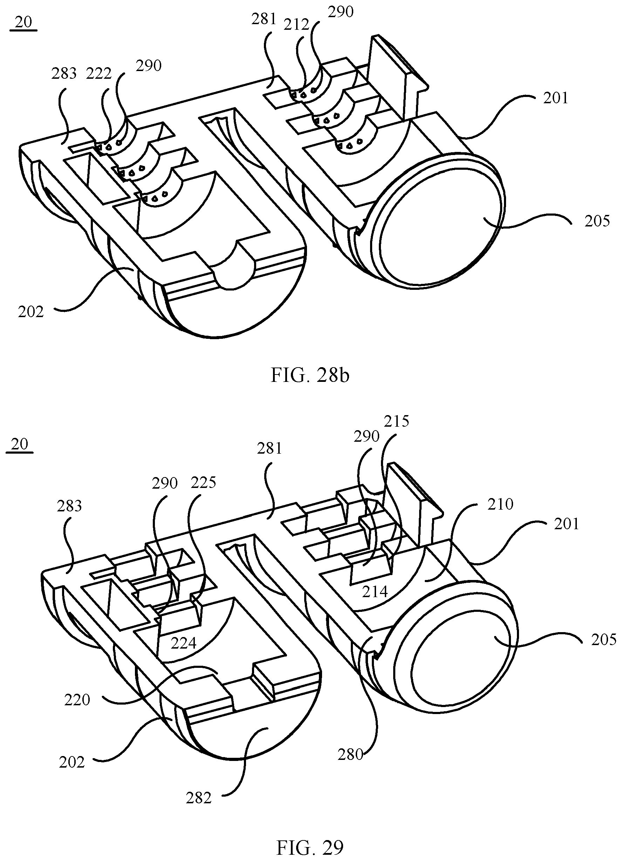

In some embodiments of this application, as shown in FIG. 28a, a longitudinal cross-section (the longitudinal cross-section is perpendicular to a cabling direction of the drop cable) of the first limiting bump 290 is a trapezoid. Alternatively, in some other embodiments of this application, as shown in FIG. 28b, a longitudinal cross-section of the first limiting bump 290 is a triangle. Alternatively, a longitudinal cross-section of the first limiting bump 290 is a rectangle.

In addition, as shown in FIG. 29, the first cable passing structure 21 further includes at least one first reinforcing rib 214 and at least one third clamping groove 215, to further limit the drop cable in the cable channel 200 formed by aligning the first cable passing structure 21 of the first clamping member 201 and the second cable passing structure 22 of the second clamping member 202.

The first reinforcing rib 214 is located in the first trough 210 and disposed in parallel with the first exit side wall 280. One third clamping groove 215 is disposed on one first reinforcing rib 214 and communicates with the first trough 210.

In addition, the second cable passing structure 22 further includes at least one second reinforcing rib 224

The second reinforcing rib 224 is located in the second trough 220 and disposed in parallel with the second exit side wall 282. One fourth clamping groove 225 is disposed on one second reinforcing rib 224 and communicates with the second trough 220.

In addition, the optical cable securing structure 20 further includes at least one first limiting bump 290 disposed on a groove bottom of the third clamping groove 215 and at least one first limiting bump 290 disposed on a groove bottom of the fourth clamping groove 225. The first limiting bump 290 is configured to limit the optical cable. After the first clamping member 201 and the second clamping member 202 are clamped together, the first limiting bump 290 enables an interference fit between the drop cable and a through hole formed by aligning the third clamping groove 215 having the first limiting bump 290 and the fourth clamping groove 225 having the first limiting bump 290.

The foregoing descriptions are merely specific implementations of the present invention, but are not intended to limit the protection scope of the present invention. The protection scope of the present invention shall be defined by the protection scope of the claims.

## Claims

1. An optical cable connection apparatus (01) comprising:
• a top cover (10);
• a bottom housing (11) rotationally connected to the top cover (10), and forming a receptacle with the top cover (10), wherein at least one optical cable hole (100) and a plurality of fiber leading-out holes (101) are disposed on the bottom housing (11);
• a flap (12), wherein the flap (12) is located in the receptacle and is rotationally connected to the top cover (10) or the bottom housing (11), and the flap (12) comprises a first surface and a second surface that are disposed opposite to each other;
• at least one optical fiber connection module (13) disposed on the first surface of the flap (12), wherein the optical fiber connection module (13) comprises a plurality of optical fiber interfaces (131), and each of the optical fiber interfaces (131) is configured to be connected to one optical fiber sub-assembly (132); and
• a first splicing assembly (14) disposed on the second surface of the flap (12), wherein the first splicing assembly (14) comprises a plurality of first fiber splicing slots (140) and a first fiber spool structure (141), **characterised by**
• an optical cable securing structure (20), wherein the optical cable securing structure (20) comprises:
∘ a first clamping member (201), wherein a first cable passing structure is configured on a first fitting surface that is of the first clamping member (201) and that is used for securing an optical cable;
∘ a second clamping member (202), wherein a second cable passing structure is configured on a second fitting surface that is of the second clamping member (202) and that is used for securing the optical cable;
∘ a fastener (203) comprising a buckle (213) and a slot (223), wherein the buckle (213) is connected to the first clamping member (201) and the slot (223) is located on the second fitting surface of the second clamping member (202), wherein the buckle (213) and the slot (223) cooperate with each other to implement a detachable connection between the first clamping member (201) and the second clamping member (202), wherein, when the first clamping member (201) and the second clamping member (202) are detachably connected:
▪ at least a part of the first fitting surface of the first clamping member (201) touches at least a part of the second fitting surface of the second clamping member (202),
▪ the first cable passing structure and the second cable passing structure are aligned to form a cable channel (200) configured to lead through the optical cable, and the cable channel is in interference fit with the optical cable;
∘ a tearing member (204) connected to a first end face of the first clamping member (201), the first end face being configured to lead out the optical cable; and
∘ a protection cover (205), wherein one part of the protection cover (205) is connected to the tearing member (204), the other part of the protection cover (205) protrudes from the first end face, the protection cover (205) covers a mouth of the cable channel (200) when the first clamping member (201) and the second clamping member (202) are clamped together by the fastener (203), wherein the protection cover (205) and the tearing member (204) seal the cable channel (200).

2. The optical cable connection apparatus according to claim 1, wherein the optical cable connection apparatus further comprises:
• a second splicing assembly disposed on a surface of the bottom housing and that faces the top cover, wherein the second splicing assembly comprises a plurality of second fiber splicing slots and a second fiber spool structure.

3. The optical cable connection apparatus according to claim 1 or 2, wherein the optical cable connection apparatus further comprises:
• a splicing tray rotationally connected to the bottom housing and located between the flap and the bottom housing; and
• a third splicing assembly disposed on a surface that is of the splicing tray and that faces the flap, wherein the third splicing assembly comprises a plurality of third fiber splicing slots and a third fiber spool structure.

4. The optical cable connection apparatus according to any one of claims 1 to 3, wherein the optical fiber connection module further comprises:
• an optical splitter bracket having at least one layer of mounting groove; and
• at least one bracket-mounted optical splitter, wherein one bracket-mounted optical splitter is mounted in one layer of mounting groove.

5. The optical cable connection apparatus according to claim **4,** wherein the optical fiber connection module further comprises a rotating shaft, wherein
• the optical splitter bracket is rotationally connected to the flap through the rotating shaft and an included angle is formed between the optical splitter bracket and the first surface of the flap.

6. The optical cable connection apparatus according to any one of claims 1 to 3, wherein the optical fiber connection module further comprises a termination panel, an optical fiber interface at one side of the termination panel is configured to be coupled to a to-be-connected optical cable, and an optical fiber interface at the other side of the termination panel is configured to be coupled to a pigtail.

7. The optical cable connection apparatus according to claim 6, wherein the optical cable connection apparatus further comprises a micro optical splitter disposed on the second surface of the flap and outputs of the micro optical splitter are configured to be one-to-one coupled to a plurality of optical fiber interfaces that are on a same connection surface of the termination panel.

8. The optical cable connection apparatus according to claim 7, wherein the optical cable connection apparatus further comprises an optical splitter securing slot disposed on the second surface of the flap, and the optical splitter securing slot is configured to secure the micro optical splitter.

9. The optical cable connection apparatus according to any one of claims 1 to 8, wherein the optical cable connection apparatus further comprises:
• at least one fourth fiber spool structure disposed on the second surface of the flap; and
• a separation plate disposed on the second surface of the flap and located between the first splicing assembly and the fourth fiber spool structure, wherein there is a cabling gap between one end of the separation plate and **a side wall** of the flap.

10. The optical cable connection apparatus according to any one of claims 1 to 9, wherein the optical cable connection apparatus further comprises at least one cabling hole disposed on the flap, and the cabling hole penetrates the first surface and the second surface and is configured to pass an optical fiber coupled to the optical fiber connection module.

11. The optical cable connection apparatus according to any one of claims 1 to 10, wherein the optical cable connection apparatus further comprises:
• a first optical fiber routing path disposed on the flap and configured to lead an optical cable to the first surface; and
• a second optical fiber routing path disposed on the flap and configured to lead the optical cable to the second surface.

12. The optical cable connection apparatus according to claim 11, wherein
the first cable passing structure comprises:
∘ a first trough disposed on the first fitting surface and comprising a first exit side wall close to the protection cover and a first entrance side wall away from the protection cover;
∘ a first cabling groove disposed on the first exit side wall and communicating with the first trough; and
∘ a first clamping groove, disposed on the first entrance side wall and communicating with the first trough;
the second cable passing structure comprises:
∘ a second trough disposed on the second fitting surface and comprising a second exit side wall close to the protection cover and a second entrance side wall away from the protection cover;
∘ a second cabling groove, disposed on the second exit side wall and communicating with the second trough; and
∘ a second clamping groove, disposed on the second entrance side wall and communicating with the second trough,
wherein:
∘ a through hole formed by aligning the first cabling groove and the second cabling groove is in clearance fit with an optical cable; and
∘ the optical cable securing structure further comprises at least one first limiting bump disposed on a groove bottom of the first clamping groove **and at least** one first limiting bump disposed on a groove bottom of the second clamping groove, and the first limiting bump is configured to limit the optical cable, to enable an interference fit between the optical cable and the through hole formed by aligning the first clamping groove having the first limiting bump and the second clamping groove having the first limiting bump.

13. The optical cable connection apparatus according to claim 12, wherein
the first cable passing structure further comprises:
∘ at least one first reinforcing rib located in the first trough and disposed in parallel with the first exit side wall; and
∘ at least one third clamping groove, wherein one third clamping groove is disposed on one first reinforcing rib and communicates with the first trough;
the second cable passing structure further comprises:
∘ at least one second reinforcing rib located in the second trough and disposed in parallel with the second exit side wall; and
∘ at least one fourth clamping groove, wherein one fourth clamping groove is disposed on one second reinforcing rib and communicates with the second trough; and
the optical cable securing structure further comprises at least one first limiting bump disposed on a groove bottom of the third clamping groove and at least one first limiting bump disposed on a groove bottom of the fourth clamping groove, and the first limiting bump is configured to limit the optical cable, to enable an interference fit between the optical cable and a through hole formed by aligning the third clamping groove having the first limiting bump and the fourth clamping groove having the first limiting bump.

14. The optical cable connection apparatus according to any of the preceding claims, wherein the optical cable securing structure further comprises a plurality of second limiting bumps; and
the second limiting bump is disposed on a part that is of a surface, away from the first fitting surface, of the first clamping member and that is configured to fit the fiber leading-out hole; and is disposed on a part that is of the surface, away from the second fitting surface, of the second clamping member and that is configured to fit the fiber leading-out hole.

## Patentansprüche

1. Verbindungsgerät (01) für optische Kabel, umfassend:
• eine obere Abdeckung (10);
• ein unteres Gehäuse (11), das drehbar mit der oberen Abdeckung (10) verbunden ist und eine Aufnahme mit der oberen Abdeckung (10) bildet, wobei mindestens ein Loch (100) für optische Kabel und eine Vielzahl von Faserherausführungslöchern (101) auf dem unteren Gehäuse (11) angeordnet sind;
• eine Klappe (12), wobei sich die Klappe (12) in der Aufnahme befindet und drehbar mit der oberen Abdeckung (10) oder dem unteren Gehäuse (11) verbunden ist und die Klappe (12) eine erste Fläche und eine zweite Fläche umfasst, die einander gegenüberliegend angeordnet sind;
• mindestens ein Glasfaserverbindungsmodul (13), das auf der ersten Fläche der Klappe (12) angeordnet ist, wobei das Glasfaserverbindungsmodul (13) eine Vielzahl von Glasfaserschnittstellen (131) umfasst und jede der Glasfaserschnittstellen (131) dazu konfiguriert ist, mit einer Glasfaserteilbaugruppe (132) verbunden zu werden; und
• eine erste Spleißbaugruppe (14), die auf der zweiten Fläche der Klappe (12) angeordnet ist, wobei die erste Spleißbaugruppe (14) eine Vielzahl von ersten Faserspleißschlitzen (140) und eine erste Faserspulenstruktur (141) umfasst, **gekennzeichnet durch**
• eine Sicherungsstruktur (20) für optische Kabel, wobei die Sicherungsstruktur (20) für optische Kabel Folgendes umfasst:
□ ein erstes Klemmelement (201), wobei eine erste Kabelverlaufsstruktur auf einer ersten Passfläche konfiguriert ist, die zu dem ersten Klemmelement (201) gehört und zum Sichern eines optischen Kabels verwendet wird;
□ ein zweites Klemmelement (202), wobei eine zweite Kabelverlaufsstruktur auf einer zweiten Passfläche konfiguriert ist, die zu dem zweiten Klemmelement (202) gehört und zum Sichern des optischen Kabels verwendet wird;
□ ein Befestigungselement (203), das eine Spange (213) und einen Schlitz (223) umfasst, wobei die Spange (213) mit dem ersten Klemmelement (201) verbunden ist und der Schlitz (223) sich auf der zweiten Passfläche des zweiten Klemmelements (202) befindet, wobei die Spange (213) und der Schlitz (223) zusammenwirken, um eine lösbare Verbindung zwischen dem ersten Klemmelement (201) und dem zweiten Klemmelement (202) herzustellen, wobei, wenn das erste Klemmelement (201) und das zweite Klemmelement (202) lösbar verbunden sind:
▪ mindestens ein Teil der ersten Passfläche des ersten Klemmelements (201) mindestens einen Teil der zweiten Passfläche des zweiten Klemmelements (202) berührt,
▪ die erste Kabelverlaufsstruktur und die zweite Kabelverlaufsstruktur so ausgerichtet sind, dass sie einen Kabelkanal (200) bilden, der dazu konfiguriert ist, das optische Kabel durchzuführen, und der Kabelkanal in Presspassung mit dem optischen Kabel steht;
□ ein Reißelement (204), das mit einer ersten Endfläche des ersten Klemmelements (201) verbunden ist, wobei die erste Endfläche dazu konfiguriert ist, das optische Kabel herauszuführen; und
□ eine Schutzabdeckung (205), wobei ein Teil der Schutzabdeckung (205) mit dem Reißelement (204) verbunden ist und der andere Teil der Schutzabdeckung (205) von der ersten Endfläche hervorsteht, wobei die Schutzabdeckung (205) eine Mündung des Kabelkanals (200) abdeckt, wenn das erste Klemmelement (201) und das zweite Klemmelement (202) durch das Befestigungselement (203) zusammengeklemmt sind, wobei die Schutzabdeckung (205) und das Reißelement (204) den Kabelkanal (200) abdichten.

2. Verbindungsgerät für optische Kabel nach Anspruch 1, wobei das Verbindungsgerät für optische Kabel ferner Folgendes umfasst:
• eine zweite Spleißbaugruppe, die auf einer Fläche des unteren Gehäuses angeordnet ist und der oberen Abdeckung zugewandt ist, wobei die zweite Spleißbaugruppe eine Vielzahl von zweiten Faserspleißschlitzen und eine zweite Faserspulenstruktur umfasst.

3. Verbindungsgerät für optische Kabel nach Anspruch 1 oder 2, wobei das Verbindungsgerät für optische Kabel ferner Folgendes umfasst:
• eine Spleißablage, die drehbar mit dem unteren Gehäuse verbunden ist und sich zwischen der Klappe und dem unteren Gehäuse befindet; und
• eine dritte Spleißbaugruppe, die auf einer Fläche angeordnet ist, die zu der Spleißablage gehört und der Klappe zugewandt ist, wobei die dritte Spleißbaugruppe eine Vielzahl von dritten Faserspleißschlitzen und eine dritte Faserspulenstruktur umfasst.

4. Verbindungsgerät für optische Kabel nach einem der Ansprüche 1 bis 3, wobei das Glasfaserverbindungsmodul ferner Folgendes umfasst:
• eine Halterung für optische Splitter, die mindestens eine Schicht einer Montagenut aufweist; und
• mindestens ein in der Halterung montierter optischer Splitter, wobei ein in der Halterung montierter optischer Splitter in einer Schicht der Montagenut montiert ist.

5. Verbindungsgerät für optische Kabel nach Anspruch 4, wobei das Glasfaserverbindungsmodul ferner eine Drehwelle umfasst, wobei
• die Halterung für optische Splitter über die Drehwelle drehbar mit der Klappe verbunden ist und zwischen der Halterung für optische Splitter und der ersten Fläche der Klappe ein beinhalteter Winkel gebildet ist.

6. Verbindungsgerät für optische Kabel nach einem der Ansprüche 1 bis **3,** wobei das Glasfaserverbindungsmodul ferner ein Abschlussfeld umfasst, eine Glasfaserschnittstelle auf einer Seite des Abschlussfelds dazu konfiguriert ist, mit einem zu verbindenden optischen Kabel gekoppelt zu werden, und eine Glasfaserschnittstelle auf der anderen Seite des Abschlussfelds dazu konfiguriert ist, mit einem Pigtail gekoppelt zu werden.

7. Verbindungsgerät für optische Kabel nach Anspruch **6,** wobei das Verbindungsgerät für optische Kabel ferner einen optischen Mikrosplitter umfasst, der auf der zweiten Fläche der Klappe angeordnet ist, und Ausgänge des optischen Mikrosplitters dazu konfiguriert sind, eins-zu-eins mit einer Vielzahl von Glasfaserschnittstellen gekoppelt zu werden, die auf derselben Verbindungsfläche des Abschlussfelds liegt.

8. Verbindungsgerät für optische Kabel nach Anspruch **7,** wobei das Verbindungsgerät für optische Kabel ferner einen Sicherungsschlitz für optische Splitter umfasst, der auf der zweiten Fläche der Klappe angeordnet ist, und der Sicherungsschlitz für optische Splitter dazu konfiguriert ist, den optischen Mikrosplitter zu sichern.

9. Verbindungsgerät für optische Kabel nach einem der Ansprüche 1 bis 8, wobei das Verbindungsgerät für optische Kabel ferner Folgendes umfasst:
• mindestens eine vierte Faserspulenstruktur, die auf der zweiten Fläche der Klappe angeordnet ist; und
• eine Trennplatte, die auf der zweiten Fläche der Klappe angeordnet ist und sich zwischen der ersten Spleißbaugruppe und der vierten Faserspulenstruktur befindet, wobei zwischen einem Ende der Trennplatte und einer Seitenwand der Klappe ein Verkabelungsspalt besteht.

10. Verbindungsgerät für optische Kabel nach einem der Ansprüche 1 bis 9, wobei das Verbindungsgerät für optische Kabel ferner mindestens ein Verkabelungsloch umfasst, das auf der Klappe angeordnet ist, und das Verkabelungsloch die erste Fläche und die zweite Fläche durchdringt und dazu konfiguriert ist, eine mit dem Glasfaserverbindungsmodul gekoppelte Glasfaser durchzulassen.

11. Verbindungsgerät für optische Kabel nach einem der Ansprüche 1 bis 10, wobei das Verbindungsgerät für optische Kabel ferner Folgendes umfasst:
• einen ersten Glasfaserleitungsweg, der auf der Klappe angeordnet und dazu konfiguriert ist, ein optisches Kabel zu der ersten Fläche zu führen; und
• einen zweiten Glasfaserleitungsweg, der auf der Klappe angeordnet und dazu konfiguriert ist, das optische Kabel zu der zweiten Fläche zu führen.

12. Verbindungsgerät für optische Kabel nach Anspruch 11, wobei die erste Kabelverlaufsstruktur Folgendes umfasst:
□ eine erste Mulde, die auf der ersten Passfläche angeordnet ist und eine erste Austrittsseitenwand nahe der Schutzabdeckung und eine erste Eintrittsseitenwand weg von der Schutzabdeckung umfasst;
□ eine erste Verkabelungsnut, die auf der ersten Austrittsseitenwand angeordnet ist und mit der ersten Mulde in Verbindung steht; und
□ eine erste Klemmnut, die auf der ersten Eintrittsseitenwand angeordnet ist und mit der ersten Mulde in Verbindung steht;
wobei die zweite Kabelverlaufsstruktur Folgendes umfasst:
□ eine zweite Mulde, die auf der zweiten Passfläche angeordnet ist und eine zweite Austrittsseitenwand nahe der Schutzabdeckung und eine zweite Eintrittsseitenwand weg von der Schutzabdeckung umfasst;
□ eine zweite Verkabelungsnut, die auf der zweiten Austrittsseitenwand angeordnet ist und mit der zweiten Mulde in Verbindung steht; und
□ eine zweite Klemmnut, die auf der zweiten Eintrittsseitenwand angeordnet ist und mit der zweiten Mulde in Verbindung steht,
wobei:
□ ein Durchgangsloch, das durch Ausrichten der ersten Verkabelungsnut und der zweiten Verkabelungsnut gebildet wird, in Spielpassung mit einem optischen Kabel steht; und
□ die Sicherungsstruktur für optische Kabel ferner mindestens einen ersten Begrenzungshöcker, der auf einem Nutboden der ersten Klemmnut angeordnet ist, und mindestens einen ersten Begrenzungshöcker, der auf einem Nutboden der zweiten Klemmnut angeordnet ist, umfasst und der erste Begrenzungshöcker dazu konfiguriert ist, das optische Kabel zu begrenzen, um eine Presspassung zwischen dem optischen Kabel und dem Durchgangsloch zu ermöglichen, das durch Ausrichten der ersten Klemmnut, die den ersten Begrenzungshöcker aufweist, und der zweiten Klemmnut, die den ersten Begrenzungshöcker aufweist, gebildet wird.

13. Verbindungsgerät für optische Kabel nach Anspruch 12, wobei die erste Kabelverlaufsstruktur ferner Folgendes umfasst:
□ mindestens eine erste Verstärkungsrippe, die sich in der ersten Mulde befindet und parallel zu der ersten Austrittsseitenwand angeordnet ist; und
□ mindestens eine dritte Klemmnut, wobei eine dritte Klemmnut auf einer ersten Verstärkungsrippe angeordnet ist und mit der ersten Mulde in Verbindung steht;
wobei die zweite Kabelverlaufsstruktur ferner Folgendes umfasst:
□ mindestens eine zweite Verstärkungsrippe, die sich in der zweiten Mulde befindet und parallel zu der zweiten Austrittsseitenwand angeordnet ist; und
□ mindestens eine vierte Klemmnut, wobei eine vierte Klemmnut auf einer zweiten Verstärkungsrippe angeordnet ist und mit der zweiten Mulde in Verbindung steht; und
die Sicherungsstruktur für optische Kabel ferner mindestens einen ersten Begrenzungshöcker, der auf einem Nutboden der dritten Klemmnut angeordnet ist, und mindestens einen ersten Begrenzungshöcker, der auf einem Nutboden der vierten Klemmnut angeordnet ist, umfasst und der erste Begrenzungshöcker dazu konfiguriert ist, das optische Kabel zu begrenzen, um eine Presspassung zwischen dem optischen Kabel und einem Durchgangsloch zu ermöglichen, das durch Ausrichten der dritten Klemmnut, die den ersten Begrenzungshöcker aufweist, und der vierten Klemmnut, die den ersten Begrenzungshöcker aufweist, gebildet wird.

14. Verbindungsgerät für optische Kabel nach einem der vorhergehenden Ansprüche, wobei die Sicherungsstruktur für optische Kabel ferner eine Vielzahl von zweiten Begrenzungshöckern umfasst; und
der zweite Begrenzungshöcker auf einem Teil, der zu einer Fläche gehört, die von der ersten Passfläche weg liegt, des ersten Klemmelements angeordnet und dazu konfiguriert ist, in das Faserherausführungsloch zu passen; und auf einem Teil, der zu der Fläche gehört, die von der zweiten Passfläche weg liegt, des zweiten Klemmelements angeordnet und dazu konfiguriert ist, in das Faserherausführungsloch zu passen.

## Revendications

1. Appareil de connexion de câble optique (01) comprenant :
• un couvercle supérieur (10) ;
• un boîtier inférieur (11) relié de manière rotative au couvercle supérieur (10), et formant un réceptacle avec le couvercle supérieur (10), dans lequel au moins un trou de câble optique (100) et une pluralité de trous de sortie de fibre (101) sont disposés sur le boîtier inférieur (11) ;
• un rabat (12), dans lequel le rabat (12) est situé dans le réceptacle et est relié de manière rotative au couvercle supérieur (10) ou au boîtier inférieur (11), et le rabat (12) comprend une première surface et une seconde surface qui sont disposées en face l'une de l'autre ;
• au moins un module de connexion de fibre optique (13) disposé sur la première surface du rabat (12), dans lequel le module de connexion de fibre optique (13) comprend une pluralité d'interfaces de fibre optique (131), et chacune des interfaces de fibre optique (131) est configurée pour être connectée à un sous-ensemble de fibre optique (132) ; et
• un premier ensemble d'épissage (14) disposé sur la seconde surface du rabat (12), dans lequel le premier ensemble d'épis-sage (14) comprend une pluralité de premières fentes d'épissage de fibres (140) et une première structure de bobine de fibres (141), **caractérisé par**
• une structure de fixation de câble optique (20), dans lequel la structure de fixation de câble optique (20) comprend :
□ un premier organe de serrage (201), dans lequel une première structure de passage de câble est configurée sur une première surface de montage qui fait partie du premier organe de serrage (201) et qui est utilisée pour fixer un câble optique ;
□ un second organe de serrage (202), dans lequel une seconde structure de passage de câble est configurée sur une seconde surface de montage qui fait partie du second organe de serrage (202) et qui est utilisée pour fixer le câble optique ;
□ un organe de fixation (203) comprenant une boucle (213) et une fente (223), dans lequel la boucle (213) est reliée au premier organe de serrage (201) et la fente (223) est située sur la seconde surface de montage du second organe de serrage (202), dans lequel la boucle (213) et la fente (223) coopèrent l'une avec l'autre pour mettre en œuvre une liaison détachable entre le premier organe de serrage (201) et le second organe de serrage (202), dans lequel, lorsque le premier organe de serrage (201) et le second organe de serrage (202) sont reliés de manière détachable :
▪ au moins une partie de la première surface de montage du premier organe de serrage (201) touche au moins une partie de la seconde surface de montage du second organe de serrage (202),
▪ la première structure de passage de câble et la seconde structure de passage de câble sont alignées pour former un canal de câble (200) configuré pour permettre le passage du câble optique à travers celui-ci, et le canal de câble est en ajustement serré avec le câble optique ;
□ un organe de déchirement (204) relié à une première face d'extrémité du premier organe de serrage (201), la première face d'extrémité étant configurée pour faire sortir le câble optique ; et
□ un couvercle de protection (205), dans lequel une partie du couvercle de protection (205) est reliée à l'organe de déchirement (204), l'autre partie du couvercle de protection (205) fait saillie à partir de la première face d'extrémité, le couvercle de protection (205) recouvre une embouchure du canal de câble (200) lorsque le premier organe de serrage (201) et le second organe de serrage (202) sont serrés ensemble par l'organe de fixation (203), dans lequel le couvercle de protection (205) et l'organe de déchirement (204) assurent l'étanchéité du canal de câble (200).

2. Appareil de connexion de câble optique selon la revendication 1, dans lequel l'appareil de connexion de câble optique comprend également :
• un deuxième ensemble d'épissage disposé sur une surface du boîtier inférieur et qui fait face au couvercle supérieur, dans lequel le deuxième ensemble d'épissage comprend une pluralité de deuxièmes fentes d'épissage de fibres et une deuxième structure de bobine de fibre.

3. Appareil de connexion de câble optique selon la revendication 1 ou 2, dans lequel l'appareil de connexion de fibre optique comprend également :
• un plateau d'épissage relié de manière rotative au boîtier inférieur et situé entre le rabat et le boîtier inférieur ; et
• un troisième ensemble d'épissage disposé sur une surface qui fait partie du plateau d'épissage et qui fait face au rabat, dans lequel le troisième ensemble d'épissage comprend une pluralité de troisièmes fentes d'épissage de fibres et une troisième structure de bobine de fibre.

4. Appareil de connexion de câble optique selon l'une quelconque des revendications 1 à 3, dans lequel le module de connexion de fibre optique comprend également :
• un support de séparateur optique comportant au moins une couche de rainure de montage ; et
• au moins un séparateur optique monté sur support, dans lequel un séparateur optique monté sur support est monté dans une couche de rainure de montage.

5. Appareil de connexion de câble optique selon la revendication 4, dans lequel le module de connexion de fibre optique comprend également un arbre rotatif, dans lequel
• le support de séparateur optique est relié de manière rotative au rabat par l'intermédiaire de l'arbre rotatif et un angle inclus est formé entre le support de séparateur optique et la première surface du rabat.

6. Appareil de connexion de câble optique selon l'une quelconque des revendications 1 à 3, dans lequel le module de connexion de fibre optique comprend également un panneau de terminaison, une interface de fibre optique au niveau d'un côté du panneau de terminaison est configurée pour être couplée à un câble optique à connecter, et une interface de fibre optique au niveau de l'autre côté du panneau de terminaison est configurée pour être couplée à une fibre amorce.

7. Appareil de connexion de câble optique selon la revendication 6, dans lequel l'appareil de connexion de câble optique comprend également un micro-séparateur optique disposé sur la seconde surface du rabat et des sorties du micro-séparateur optique sont configurées pour être couplées une à une à une pluralité d'interfaces de fibre optique qui se trouvent sur une même surface de connexion du panneau de terminaison.

8. Appareil de connexion de câble optique selon la revendication 7, dans lequel l'appareil de connexion de câble optique comprend également une fente de fixation du séparateur optique disposée sur la seconde surface du rabat, et la fente de fixation du séparateur optique est configurée pour fixer le micro-séparateur optique.

9. Appareil de connexion de câble optique selon l'une quelconque des revendications 1 à 8, dans lequel l'appareil de connexion de câble optique comprend également :
• au moins une quatrième structure de bobine de fibre disposée sur la seconde surface du rabat ; et
• une plaque de séparation disposée sur la seconde surface du rabat et située entre le premier ensemble d'épissage et la quatrième structure de bobine de fibre, dans lequel il existe un espace de câblage entre une extrémité de la plaque de séparation et une paroi latérale du rabat.

10. Appareil de connexion de câble optique selon l'une quelconque des revendications 1 à 9, dans lequel l'appareil de connexion de câble optique comprend également au moins un trou de câblage disposé sur le rabat, et le trou de câblage pénètre dans la première surface et la seconde surface et est configuré pour faire passer une fibre optique couplée au module de connexion de fibre optique.

11. Appareil de connexion de câble optique selon l'une quelconque des revendications 1 à 10, dans lequel l'appareil de connexion de câble optique comprend également :
• un premier chemin d'acheminement de fibres optiques disposé sur le rabat et configuré pour conduire un câble optique jusqu'à la première surface ; et
• un second chemin d'acheminement de fibres optiques disposé sur le rabat et configuré pour conduire le câble optique jusqu'à la seconde surface.

12. Appareil de connexion de câble optique selon la revendication 11, dans lequel
la première structure de passage de câble comprend :
□ une première goulotte disposée sur la première surface de montage et comprenant une première paroi latérale de sortie proche du couvercle de protection et une première paroi latérale d'entrée éloignée du couvercle de protection ;
□ une première rainure de câblage disposée sur la première paroi latérale de sortie et communiquant avec la première goulotte ; et
□ une première rainure de serrage, disposée sur la première paroi latérale d'entrée et communiquant avec la première goulotte ;
la seconde structure de passage de câbles comprend :
□ une seconde goulotte disposée sur la seconde surface de montage et comprenant une seconde paroi latérale de sortie proche du couvercle de protection et une seconde paroi latérale d'entrée éloignée du couvercle de protection ;
□ une seconde rainure de câblage, disposée sur la seconde paroi latérale de sortie et communiquant avec la seconde goulotte ; et
□ une deuxième rainure de serrage, disposée sur la seconde paroi latérale d'entrée et communiquant avec la seconde goulotte,
dans lequel :
□ un trou traversant formé par l'alignement de la première rainure de câblage avec la seconde rainure de câblage est en ajustement avec jeu avec un câble optique ; et
□ la structure de fixation de câble optique comprend également au moins une première bosse de limitation disposée sur un fond de rainure de la première rainure de serrage et au moins une première bosse de limitation disposée sur un fond de rainure de la deuxième rainure de serrage, et la première bosse de limitation est configurée pour limiter le câble optique, pour permettre un ajustement serré entre le câble optique et le trou traversant formé par l'alignement de la première rainure de serrage ayant la première bosse de limitation avec la deuxième rainure de serrage ayant la première bosse de limitation.

13. Appareil de connexion de câble optique selon la revendication 12, dans lequel
la première structure de passage de câble comprend également :
□ au moins une première nervure de renfort située dans la première goulotte et disposée parallèlement à la première paroi latérale de sortie ; et
□ au moins une troisième rainure de serrage, dans lequel une troisième rainure de serrage est disposée sur une première nervure de renfort et communique avec la première goulotte ;
la seconde structure de passage de câbles comprend également :
□ au moins une seconde nervure de renfort située dans la seconde goulotte et disposée parallèlement à la seconde paroi latérale de sortie ; et
□ au moins une quatrième rainure de serrage, dans lequel une quatrième rainure de serrage est disposée sur une seconde nervure de renfort et communique avec la seconde goulotte ; et
la structure de fixation de câble optique comprend également au moins une première bosse de limitation disposée sur un fond de rainure de la troisième rainure de serrage et au moins une première bosse de limitation disposée sur un fond de rainure de la quatrième rainure de serrage, et la première bosse de limitation est configurée pour limiter le câble optique, pour permettre un ajustement serré entre le câble optique et un trou traversant formé par l'alignement de la troisième rainure de serrage ayant la première bosse de limitation avec la quatrième rainure de serrage ayant la première bosse de limitation.

14. Appareil de connexion de câble optique selon l'une quelconque des revendications précédentes, dans lequel la structure de fixation de câble optique comprend également une pluralité de secondes bosses de limitation ; et
la seconde bosse de limitation est disposée sur une partie qui fait partie d'une surface, éloignée de la première surface de montage, du premier organe de serrage et qui est configurée pour s'adapter au trou de sortie de fibres ; et est disposée sur une partie qui fait partie de la surface, éloignée de la seconde surface de montage, du second organe de serrage et qui est configurée pour s'adapter au trou de sortie de fibres.
